# EUROPÄISCHE PATENTANMELDUNG

(11) **EP 3 888 435 A1**
(43) Veröffentlichungstag der Anmeldung: **06.10.2021**
(21) Anmeldenummer: 21164516.3
(22) Anmeldetag: 24.03.2021
(51) Int. Cl.: A01C 7/08, A01C 21/00

(54) **LANDWIRTSCHAFTLICHE PNEUMATISCHE VERTEILMASCHINE**

(30) Priorität: 01.04.2020 DE 102020109024
(71) Anmelder: Horsch Maschinen GmbH, 92421 Schwandorf (DE)
(72) Erfinder: Köbler, Manfred, 92421 Schwandorf (DE)
(74) Vertreter: v. Bezold & Partner Patentanwälte - PartG mbB

(57) **Zusammenfassung**

Die Erfindung betrifft eine landwirtschaftliche pneumatische Verteilmaschine (12) zum Verteilen zumindest eines körnigen Verteilguts, mit mehreren Ausbringelementen (D) zum Ausgeben des Verteilguts, zumindest einem Verteilerkopf (24), welcher über zumindest eine Förderleitung (18) mit zumindest einem Dosierorgan (16) verbunden ist, wobei der Verteilerkopf (24) mehrere Abgänge (26) aufweist, wobei die Abgänge (26) über jeweils eine Ausbringleitung (32) mit den Ausbringelementen (D) verbunden sind, wobei zumindest einige der Ausbringleitungen (32) mittels jeweils einem Schaltelement (30) schließbar und/oder öffenbar sind, einem Positionsbestimmungssystem (P) zur Bestimmung von Ist-Positionen der Verteilmaschine (12), und einem Steuersystem (C), welches dazu eingerichtet ist, das zumindest eine Dosierorgan (16) und/oder die Schaltelemente (30) zu steuern. Die Verteilmaschine (12) zeichnet sich insbesondere dadurch aus, dass das Steuersystem (C) dazu eingerichtet ist, das zumindest eine Dosierorgan (16) und/oder die Schaltelemente (30) basierend auf Soll-Positionen (SP) zur Verteilgutausgabe aus den Ausbringelementen (D) und basierend auf zumindest einer Förderdauer des Verteilguts vom Verteilerkopf (24) zu den Ausbringelementen (D) zu steuern. Die Erfindung betrifft auch ein zugehöriges Betriebsverfahren.

## Beschreibung

Die Erfindung betrifft eine landwirtschaftliche pneumatische Verteilmaschine zum Verteilen zumindest eines z. B. körnigen Verteilguts, vorzugsweise Saatgut und/oder Düngemittel.

WO 2017 /055 266 A1 offenbart ein Beispiel einer landwirtschaftlichen pneumatischen Verteilmaschine zum Verteilen eines körnigen Verteilguts, mit mehreren Ausbringelementen zum Ausbringen des Verteilguts, einem Verteilerkopf, welcher über eine Förderleitung mit einem Dosierorgan verbunden ist, wobei der Verteilerkopf mehrere Abgänge aufweist, wobei die Abgänge pneumatisch über jeweils eine Ausbringleitung mit den Ausbringelementen verbunden sind, wobei zumindest einige der Ausbringleitungen mittels jeweils einem Schaltelement schließbar oder öffenbar sind.

Eine Aufgabe der Erfindung ist es, eine verbesserte und/oder alternative landwirtschaftliche pneumatische Verteilmaschine zu schaffen, insbesondere eine Verteilmaschine mit verbesserter Verteilgenauigkeit vorzugsweise an und/oder entlang einer Verteilgutabgabegrenze wie z. B. einer Feld- und/oder Vorgewendegrenze.

Diese Aufgabe kann mit den Merkmalen der unabhängigen Ansprüche gelöst werden. Vorteilhafte Weiterbildungen der Erfindung sind in den Unteransprüchen und der folgenden Beschreibung bevorzugter Ausführungsbeispiele der Erfindung offenbart.

Die Erfindung betrifft eine landwirtschaftliche Verteilmaschine zum Verteilen zumindest eines z. B. körnigen Verteilguts, vorzugsweise Saatgut und/oder Düngemittel. Die Verteilmaschine ist vorzugsweise eine pneumatische Verteilmaschine.

Die Verteilmaschine umfasst mehrere Ausbringelemente (z. B. Säschare vorzugsweise mit Saatfurchen-erzeugenden Einrichtungen und/oder einer Verteilgut-Andrück-Rolle) zum Ausgeben des Verteilguts und zumindest einen Verteilerkopf, der über zumindest eine Förderleitung (z. B. ein Fördersystem) mit zumindest einem Dosierorgan verbunden ist (z. B. über ein als Steigrohr, Schrägrohr oder Senkrohr ausgebildetes Förderrohr), wobei der Verteilerkopf mehrere Abgänge aufweist, wobei die Abgänge zweckmäßig pneumatisch über jeweils zumindest eine Ausbringleitung mit den Ausbringelementen verbunden sind, wobei zumindest einige der Ausbringleitungen mittels jeweils einem Schaltelement (z. B. einer Weiche, Klappe, einem Luftventil etc.) schließbar und/oder öffenbar sind.

Die Verteilmaschine umfasst ein Positionsbestimmungssystem (z. B. Global Positionen System (GPS), Differential Global Positioning System (DGPS) oder Real Time Kinematic System (RTK-System)) zur Bestimmung (z.B. Echtzeit-Bestimmung) von Ist-Positionen der Verteilmaschine.

Die Verteilmaschine umfasst ein Steuersystem, welches dazu eingerichtet ist, das zumindest eine Dosierorgan und/oder die Schaltelemente zu steuern.

Die Verteilmaschine zeichnet sich insbesondere dadurch aus, dass das Steuersystem dazu eingerichtet ist, das zumindest eine Dosierorgan und/oder zumindest einige der Schaltelemente basierend auf zweckmäßig zukünftigen Soll-Positionen zur Verteilgutausgabe aus den Ausbringelementen (z. B. inklusive keiner Verteilgutausgabe, insbesondere durch Schließen einer oder mehrerer Schaltelemente und/oder durch Deaktivieren des zumindest einen Dosierorgans) und basierend auf zumindest einer Förderdauer des Verteilguts vom Verteilerkopf zu den Ausbringelementen (vorzugsweise vorauseilend) zu steuern, z. B. dann, wenn sich die Verteilmaschine einer Verteilgutabgabegrenze nähert und/oder eine Verteilgutabgabegrenze teilweise überschreitet.

Dadurch kann insbesondere eine Verteilgenauigkeit in Bezug auf Menge und/oder Position vorzugsweise an und/oder entlang einer (insbesondere keilförmigen) Verteilgutabgabegrenze wie z. B. einer Feldgrenze und/oder Vorgewendegrenze verbessert werden.

Es ist z. B. möglich, das zumindest eine Dosierorgan und/oder zumindest einige der Schaltelemente basierend auf vom Positionsbestimmungssystem bestimmten Ist-Positionen der Verteilmaschine z. B. relativ zu zweckmäßig zukünftigen Soll-Positionen zur Verteilgutausgabe aus den Ausbringelementen (vorzugsweise vorauseilend) zu steuern.

Das Steuersystem kann insbesondere dazu eingerichtet sein, die Verteilmaschine, z. B. das zumindest eine Dosierorgan und/oder die Schaltelemente, zweckmäßig vorauseilend zu steuern, z. B. so, dass an zweckmäßig zukünftigen Soll-Positionen eine gewünschte (z. B. vorab berechnete, vorab ermittelte und/oder vorab definierte) Verteilgutausgabe aus den Ausbringelementen ermöglicht werden kann (vorzugsweise inklusive keiner Verteilgutausgabe durch Schließen einer oder mehrerer Schaltelemente und/oder durch Deaktivieren des zumindest einen Dosierorgans) und somit z. B. ein gewünschtes Verteilgutmuster erzeugt werden kann.

Das ist vorteilhaft möglich insbesondere trotz des durch die Förderlänge verursachten Förderzeit-Versatzes zwischen dem zumindest einen Dosierorgan und dem Verteilerkopf und/oder zwischen dem Verteilerkopf und den Ausbringelementen sowie des durch die Fahrgeschwindigkeit der Verteilmaschine verursachten Positions-Versatzes.

Das gewünschte Verteilgutmuster kann z. B. durch Schließen und/oder Öffnen einer oder mehrerer Schaltelemente (optional inklusive einer oder mehrerer Zwischenstellungen zwischen vollständig geöffneter und vollständig geschlossener Schaltstellung) und/oder durch Aktivieren und/oder Deaktivieren des zumindest einen Dosierorgans (optional inklusive einer oder mehrerer Zwischenmodi zwischen aktiviertem und deaktiviertem Zustand) erzielt werden.

Die Verteilmaschine ermöglicht insbesondere nicht nur, dass bei der Verteilgutausgabe vorzugsweise vorauseilend Förderdauern (z. B. unterschiedliche Förderlängen zwischen Verteilerkopf und Ausbringelementen und optional eine oder unterschiedliche Förderlängen zwischen dem zumindest einen Dosierorgan und dem Verteilerkopf) berücksichtigt werden können, sondern darüber hinaus vorzugsweise vorauseilend auch zweckmäßig zukünftige Soll-Positionen zur Verteilgutausgabe aus den Ausbringelementen und zwar insbesondere an und/oder entlang einer Verteilgutabgabegrenze.

Es ist möglich, dass die Soll-Positionen z. B. beliebig vordefinierbar sind und dem Steuersystem zweckmäßig zur Verfügung gestellt werden können.

Es ist möglich, dass das Steuersystem dazu eingerichtet ist, das zumindest eine Dosierorgan und/oder die Schaltelemente basierend auf einer Fahrgeschwindigkeit der Verteilmaschine zu steuern, insbesondere einer sich verändernden Fahrgeschwindigkeit. Dadurch können z. B. ein Bremsen und Beschleunigen der Verteilmaschine und/oder unterschiedliche Fahrgeschwindigkeiten der Verteilmaschine berücksichtigt werden.

Alternativ oder ergänzend ist es möglich, dass das Steuersystem dazu eingerichtet ist, das zumindest eine Dosierorgan und/oder die Schaltelemente basierend auf einer Fahrgeschwindigkeit der Verteilmaschine zu steuern, insbesondere einer konstant bleibenden Fahrgeschwindigkeit.

Ein Beschleunigen der Verteilmaschine kann z. B. zu einem zeitlich früheren Steuern des zumindest einen Dosierorgans und/oder der Schaltelemente führen. Alternativ oder ergänzend kann z. B. ein Abbremsen der Verteilmaschine zu einem zeitlich späteren Steuern des zumindest einen Dosierorgans und/oder der Schaltelemente führen. Die Verteilgutausgabe aus den Ausbringelementen kann somit vorzugsweise an eine sich verändernde Fahrgeschwindigkeit der Verteilmaschine angepasst werden, insbesondere dann, wenn sich die Verteilmaschine der Verteilgutabgabegrenze nähert und/oder die Verteilgutabgabegrenze teilweise überschreitet.

Das Steuersystem kann z. B. dazu eingerichtet sein, zu bestimmen, an welchen insbesondere zeitlich vorgelagerten und/oder optimierten Positionen der Verteilmaschine und/oder zu welchen insbesondere zeitlich vorgelagerten und/oder optimierten Zeitpunkten welche Schaltelemente zweckmäßig zur Verteilgutausgabe geöffnet und welche Schaltelemente zweckmäßig zur Verhinderung einer Verteilgutausgabe geschlossen werden, um vorzugsweise somit in der Folge an den Soll-Positionen eine gewünschte Verteilgutausgabe und/oder ein gewünschtes Verteilgutmuster zu ermöglichen. Alternativ oder ergänzend kann insbesondere zum gleichen Zweck das Steuersystem z. B. dazu eingerichtet sein, zu bestimmen, an welchen Positionen der Verteilmaschine und/der zu welchen Zeitpunkten das zumindest eine Dosierorgan aktiviert oder deaktiviert werden soll.

Die Schaltelemente können z. B. jeweils eine vorzugsweise geöffnete (z. B. erste) Schaltstellung aufweisen, in der Verteilgut über die Ausbringleitungen zu den Ausbringelementen geführt werden kann.

Die Schaltelemente können z. B. eine vorzugsweise geschlossene (z. B. zweite) Schaltstellung aufweisen.

In der geschlossenen Schaltstellung ist es z. B. möglich, dass eine Verteilgutzuführung an die Ausbringelemente unterbunden werden kann, dass Verteilgut mittels einer Rückleitung rückführbar und (z. B. über ein als Steigrohr, Senkrohr oder Schräg- oder Horizontalrohr) ausgebildetes Förderrohr) vorzugsweise erneut dem Verteilerkopf zugeführt werden kann und/oder dass ein (zweckmäßig durch das Schaltelement geöffneter) Bypass eine jeweilige Ausbringleitung mit einer zugehörigen Rückleitung zum Rückführen von Verteilgut z. B. pneumatisch verbinden kann.

Es ist möglich, dass die Schaltelemente zumindest eine zweckmäßig teilweise geöffnete Zwischenstellung (zweckmäßig zumindest eine Stellung zwischen der vollständig geöffneten und der vollständig geschlossenen Schaltstellung) einnehmen können, z. B. um eine Verteilung an einzelnen Abgängen, insbesondere um vorzugsweise eine Querverteilung an allen Abgängen, zweckmäßig im Wesentlichen exakt aufeinander abzustimmen. Die zumindest eine Zwischenstellung kann z. B. fest definiert oder frei wählbar sein.

Die Verteilmaschine kann z. B. einen Zirkulationsbereich aufweisen, in dem zweckmäßig mittels der Schaltelemente und/oder der Rückleitungen rückgeführtes Verteilgut zirkulieren kann. Der Zirkulationsbereich kann z. B. einen Endbereich der Förderleitung, ein (zweckmäßig als Steigrohr oder Senkrohr ausgebildetes) Förderrohr, den Verteilerkopf und/oder die Rückleitungen umfassen.

Das zumindest eine Dosierorgan kann z. B. eine Dosierwalze umfassen.

Das zumindest eine Dosierorgan kann zweckmäßig zur volumetrischen Dosierung von Verteilgut ausgebildet sein.

Die Verteilmaschine kann z. B. ein erstes Dosierorgan für ein erstes Verteilgut und ein zweites Dosierorgan für ein zweites Verteilgut aufweisen. Alternativ kann die Verteilmaschine auch ein erstes Dosierorgan und ein zweites Dosierorgan für das gleiche Verteilgut aufweisen, um somit vorzugsweise die Ausbringelemente von verschiedenen Teilbreiten der Verteilmaschine mit einer unterschiedlichen Menge an Verteilgut versorgen zu können.

Die Verteilmaschine kann z. B. einen zweigeteilten Vorratsbehälter aufweisen, mit einem Teilbereich für das erste Verteilgut und einem Teilbereich für das zweite Verteilgut

Die Verteilmaschine kann z. B. zwei separate Vorratsbehälter aufweisen, einen ersten Vorratsbehälter für das erste Verteilgut und einen Vorratsbehälter für das zweite Verteilgut.

Alternativ oder ergänzend kann in dem zweigeteilten Vorratsbehälter und/oder den separaten Vorratsbehältern auch jeweils das gleiche Verteilgut mitgeführt werden.

Es ist möglich, dass die Verteilmaschine mehrere Dosierorgane und/oder mehrere Dosiergeräte aufweist.

So kann das zumindest eine Dosierorgan z. B. einem ersten Dosiergerät zugeordnet sein.

Zumindest ein weiteres Dosierorgan kann zumindest einem weiteren Dosiergerät zugeordnet sein.

Die Verteilmaschine kann vorzugsweise eine Vielzahl an unabhängig voneinander betreibbaren Dosierorganen und/oder eine Vielzahl an unabhängig voneinander betreibbaren Dosiergeräten umfassen.

Es ist möglich, dass das zumindest eine Dosiergerät zumindest zwei unabhängig voneinander betreibbare Dosierwalzen umfasst und vorzugsweise die zumindest zwei Dosierwalzen im Wesentlichen koaxial zueinander angeordnet sind und/oder in einem gemeinsamen Dosiergerät-Gehäuse untergebracht sind.

Das Steuern des zumindest einen Dosierorgans kann z. B. dessen Aktivierung oder dessen Deaktivierung umfassen und alternativ oder ergänzend ein Verändern dessen Drehgeschwindigkeit (z. B. Drehzahl etc.), um somit vorzugsweise die dosierte Menge an Verteilgut zu verändern.

Die Ausbringleitungen können unterschiedlich lang sein und somit eine unterschiedliche Förderlänge aufweisen, so dass z. B. zumindest einige der Ausbringleitungen eine unterschiedliche Länge zwischen deren Verteilgut-Ein- und Auslässen aufweisen können. Z. B. seitlich außenliegende Ausbringleitungen können länger sein als innenliegende Ausbringleitungen.

Es ist möglich, dass das Steuersystem dazu eingerichtet ist, das zumindest eine Dosierorgan und/oder die Schaltelemente basierend auf unterschiedlichen Förderdauern des Verteilguts vom Verteilerkopf zu den Ausbringelementen vorzugsweise vorauseilend zu steuern.

Dadurch ist es z. B. möglich, jedes einzelne Ausbringelement oder aber Gruppen (z.B. Teilbreiten) von Ausbringelementen (z. B. zumindest zwei nebeneinander angeordnete Ausbringelemente) zeit-und/oder positionsverbessert mit Verteilgut zu versorgen.

Das Steuersystem kann z. B. dazu eingerichtet sein, zumindest ein Schaltelement, das einer Ausbringleitung mit zweckmäßig relativ kurzer Förderlänge zugeordnet ist, mit einer Verzögerungszeit verzögert zu steuern im Vergleich zu zumindest einem Schaltelement, das einer Ausbringleitung mit zweckmäßig relativ langer Förderlänge zugeordnet ist. Dadurch sind z. B. Ausführungsformen umfasst, in denen das Steuersystem insbesondere dazu eingerichtet ist, Schaltelemente, die Ausbringleitungen mit zweckmäßig relativ kurzer Förderlänge zugeordnet sind, Verzögerungszeit-basiert verzögert zu steuern im Vergleich zu Schaltelementen, die Ausbringleitungen mit zweckmäßig relativ langer Förderlänge zugeordnet sind.

Die Verteilmaschine kann z. B. eine zumindest einen Sensor umfassende Sensorik aufweisen, mittels der die zumindest eine Förderdauer des Verteilguts vom Verteilerkopf zu den Ausbringelementen zweckmäßig mittelbar oder unmittelbar ermittelbar ist. Die Sensorik kann z. B. einen oder mehrere Geschwindigkeitssensoren, optische Sensoren, Durchflusssensoren, Zeitsensoren und/oder Sensoren zur Verteilguterfassung umfassen, mittels deren Mess- oder Erfassungsdaten die zumindest eine Förderdauer des Verteilguts vom Verteilerkopf zu zumindest einigen der Ausbringelemente zweckmäßig mittelbar oder unmittelbar ermittelt werden können.

Die Verteilmaschine kann aber auch allgemein eine zumindest einen Sensor umfassende Sensorik aufweisen, z. B mit zumindest einem Geschwindigkeitssensor, optischen Sensor, Durchflusssensor, Zeitsensor und/oder Sensor zur Verteilguterfassung umfassen.

Es ist z. B. möglich, dass die Steuereinrichtung dazu eingerichtet ist, das zumindest eine Dosierorgan und/oder die Schaltelemente basierend auf Mess- oder Erfassungsdaten der Sensorik z. B. vorauseilend zu steuern.

Die Sensorik kann z. B. zweckmäßig mit dem Steuersystem verbunden sein. Das Steuersystem kann z. B. mittels einer Verarbeitungseinheit und/oder mittels eines mathematischen Modells dazu eingerichtet sein, Mess- oder Erfassungsdaten der Sensorik zu verarbeiten, um hierauf basierend das zumindest eine Dosierorgan und/oder die Schaltelemente vorzugsweise vorauseilend steuern zu können. In einem Ausführungsbeispiel kann dadurch z. B. die zumindest eine Förderdauer ermittelt werden, wobei auch z. B. Ausführungsformen umfasst sind, in denen die Sensorik die zumindest eine Förderdauer erfasst und dem Steuersystem zur Verfügung stellt.

Es ist möglich, dass zumindest ein Sensor am Verteilerkopf positioniert ist und/oder zumindest ein Sensor an zumindest einigen der Ausbringelemente positioniert ist. Alternativ oder ergänzend ist eine Positionierung an zumindest einigen der Ausbringleitungen zwischen dem Verteilerkopf und zumindest einigen der Ausbringelemente möglich.

Das Steuersystem kann z. B. ein mathematisches Modell (z. B. ein empirisches Modell oder Verfahren) umfassen, mittels dessen die zumindest eine Förderdauer des Verteilguts vom Verteilerkopf zu den Ausbringelementen ermittelbar ist und/oder mittels dessen die Verzögerungszeiten ermittelbar sind und zwar vorzugsweise basierend auf Mess- oder Erfassungsdaten der Sensorik. Somit können z. B. verschiedene die Förderdauer beeinflussende Größen entsprechend verarbeitet werden, insbesondere Reibwerte der Leitungen der Ausbringleitungen, Durchschnittswerte von Förderdauern oder dergl..

Das Steuersystem kann z. B. dazu eingerichtet sein, das zumindest eine Dosierorgan und/oder die Schaltelemente basierend auf einer (vorzugsweise manuell eingebbaren) zweckmäßig beliebig definierbaren Verteilgut-Ausbringmenge (z. B. in Kilogramm pro Hektar oder Körner pro Quadratmeter) und/oder einer (vorzugsweise manuell eingebbaren) zweckmäßig beliebig definierbaren Verteilgutsorte (z. B. Weizen, Roggen oder unterschiedliche Weizensorten oder Arten etc.) insbesondere vorauseilend zu steuern. Das Steuersystem kann somit z. B. dazu eingerichtet sein, das zumindest eine Dosierorgan und/oder die Schaltelemente basierend auf zweckmäßig individuell vordefinierbaren Verteilgut-Ausbringmengen und/oder Verteilgutsorten zu steuern.

Die Soll-Positionen können z. B. eine Verteilgutabgabegrenze umfassen, insbesondere definieren.

Die Verteilgutabgabegrenze kann z. B. relativ zur Fahrtrichtung der Verteilmaschine im Wesentlichen quer verlaufen (vorzugsweise im Wesentlichen rechtwinklig und/oder im Wesentlichen schräg, z. B. im Wesentlichen geradlinig, bogenförmig oder kurvenförmig).

Die Verteilgutabgabegrenze kann vorzugsweise eine z. B. virtuelle Feldgrenze und/oder Vorgewendegrenze umfassen. Damit können im Kontext der Erfindung auch z. B. sogenannte Anschlussfahrtbereiche und/oder Wendebereiche umfasst sein.

Es ist möglich, dass das Steuersystem dazu eingerichtet ist, das Dosierorgan und/oder die Schaltelemente so zu steuern, dass eine unerwünschte Verteilgutausgabe über die Verteilgutabgabegrenze hinaus zumindest reduziert wird und/oder unerwünschte Verteilgut-Fehlstellen innerhalb der Verteilgutabgabegrenze zumindest reduziert werden.

Das Steuersystem kann z. B. dazu eingerichtet sein, das Dosierorgan und/oder die Schaltelemente so zu steuern, dass ein an die Verteilgutabgabegrenze im Wesentlichen angepasstes, z. B. angenähertes, Verteilgutmuster erzeugt wird. Dazu kann z. B. eine sogenannte Teilbreitenabschaltung genutzt werden.

Es ist möglich, dass das Steuersystem dazu eingerichtet ist, die Soll-Positionen in einem vorzugsweise vordefinierbaren Toleranzbereich zu berücksichtigen. Toleranz-behaftete Soll-Positionen können z. B. Sollareale oder Sollstrecken mit zweckmäßig einer Obergrenze und einer Untergrenze umfassen. Der Toleranzbereich erlaubt vorzugsweise vordefinierbare Abweichungen von den Soll-Positionen und/oder ermöglicht insbesondere, dass das Steuersystem entlastet werden kann.

Es ist möglich, dass das Steuersystem dazu eingerichtet, insbesondere System-bedingte Toleranzen, wie z. B. Abweichungen von den Soll-Positionen zu verarbeiten. Auch ist es möglich, dass das Steuersystem dazu eingerichtet ist, die Toleranzbereiche für die Soll-Positionen und/oder die Förderdauer basierend auf System-bedingten Toleranzen zu definieren.

Das Steuersystem kann z. B. dazu eingerichtet sein, die Ist-Positionen, die Soll-Positionen und/oder die zumindest eine Förderdauer möglichst exakt zu berücksichtigen. Damit kann eine möglichst exakte Verteilgutabgabe in Bezug auf Abgabeposition und/oder Abgabemenge ermöglicht werden. Allerdings ist das z. B. mit einer relativ starken Beanspruchung des Steuersystems verbunden.

Es ist möglich, dass das Steuersystem dazu eingerichtet ist, die zumindest eine Förderdauer in einem vordefinierbaren Toleranzbereich zu berücksichtigen. Toleranz-behaftete Förderdauern ermöglichen z. B., dass nicht für jede einzelne Ausbringleitung die Förderdauer ermittelt werden muss, sondern vorzugsweise benachbarte Ausbringleitungen in Gruppen eingeteilt werden können und den einzelnen Gruppen eine Förderdauer in Form eines Mittelwerts zugeordnet werden kann.

Umso mehr Förderdauern das Steuersystem berücksichtigt, umso genauer die Verteilgutausgabe. Bei relativ wenigen Ausbringelementen und/oder ähnlich langen Förderlängen kann allerdings zumindest eine Förderdauer bereits ausreichend sein.

Das Steuersystem kann z. B. dazu eingerichtet sein, eine Förderlufterzeugungseinrichtung (z. B. ein Gebläse) zur Erzeugung einer Förderluft zum Transportieren des Verteilguts vorzugsweise vorauseilend zu steuern, z. B. basierend auf Soll-Positionen der Verteilmaschine und/oder basierend auf zumindest einer Förderdauer des Verteilguts vom Verteilerkopf zu den Ausbringelementen. Dabei kann die Förderlufterzeugungseinrichtung zweckmäßig z. B. deaktiviert werden oder aktiviert werden. Alternativ oder ergänzend kann dabei z. B. die Förderluftgeschwindigkeit verändert werden, z. B. zweckmäßig erhöht oder verlangsamt werden.

Es ist möglich, dass die Förderlufterzeugungseinrichtung dazu eingerichtet ist, eine Förderluftgeschwindigkeit in Abhängigkeit einer (z. B. konstanten und/oder sich verändernden) Fahrgeschwindigkeit zu verändern. Ein Beschleunigen der Verteilmaschine kann z. B. zu einem zeitlich früheren Steuern des zumindest einen Dosierorgans und/oder der Schaltelemente führen und somit z. B. zu einer Erhöhung der Förderluftgeschwindigkeit. Alternativ oder ergänzend kann z. B. ein Abbremsen der Verteilmaschine zu einem zeitlich späteren Steuern des zumindest einen Dosierorgans und/oder der Schaltelemente führen und somit z. B. zu einer Verringerung der Förderluftgeschwindigkeit.

Die Verteilgutausgabe und/oder die Förderluftgeschwindigkeit kann vorzugsweise an eine sich verändernde Fahrgeschwindigkeit der Verteilmaschine angepasst werden, insbesondere dann, wenn sich die Verteilmaschine der Verteilgutabgabegrenze nähert und/oder die Verteilgutabgabegrenze teilweise überschreitet.

Das Steuersystem kann z. B. mit einer Eingabeeinrichtung (z. B. eine Tastatur, ein Computer, ein Touchscreen, ein Tablet (z.B. mobiles Endgerät wie Tablet-PC; Smartphone oder dergl.) und/oder eine Daten-Schnittstelle (data interface) etc.) koppelbar sein, mittels der die zweckmäßig gewünschte Verteilgut-Ausbringmenge und/oder die zweckmäßig gewünschte Verteilgutsorte zweckmäßig eingebbar und vordefinierbar ist, insbesondere durch einen Nutzer (z. B. Landwirt) der Verteilmaschine. Alternativ oder ergänzend können mittels der Eingabeeinrichtung z. B. die Soll-Positionen und/oder der Toleranzbereich zweckmäßig eingegeben und vordefiniert werden, insbesondere durch einen Nutzer (z. B. Landwirt) der Verteilmaschine. Die Eingabeeinrichtung ist vorzugsweise zur manuellen Eingabe ausgebildet. Die manuelle Eingabe kann z. B. drahtlos (z. B. Bluetooth, Funk etc.) und/oder drahtgebunden und/oder über eine mechanische Datenschnittstelle für ein Wechselmedium (z. B. USB-Stick, CD, DVD etc.) erfolgen.

Es ist möglich, dass das Steuersystem dazu eingerichtet ist, das zumindest eine Dosierorgan und/oder die Schaltelemente basierend auf zumindest einer Förderdauer des Verteilguts vom zumindest einen Dosierorgan zum Verteilerkopf z. B. vorauseilend zu steuern. Z. B. können unterschiedliche Dosierorgane unterschiedlich weit vom Verteilerkopf oder Verteilerköpfen entfernt sein, so dass z. B. unterschiedliche Förderdauern möglich sind.

Bei einem Ausführungsbeispiel kann das Steuersystem dazu eingerichtet sein, das zumindest eine Dosierorgan und/oder zumindest einige der Schaltelemente basierend auf vom Positionsbestimmungssystem bestimmten Ist-Positionen der Verteilmaschine und (zweckmäßig zukünftigen) Soll-Positionen zur Verteilgutausgabe aus den Ausbringelementen und basierend auf zumindest einer Förderdauer des Verteilguts vom Verteilerkopf zu den Ausbringelementen (vorzugsweise vorauseilend) zu steuern. Dabei ist es z. B. besonders vorteilhaft, dass das zumindest eine Dosierorgan und/oder zumindest einige der Schaltelemente basierend auf vom Positionsbestimmungssystem bestimmten Ist-Positionen der Verteilmaschine relativ zu zweckmäßig zukünftigen Soll-Positionen der Verteilmaschine, insbesondere Soll-Positionen zur Verteilgutausgabe aus den Ausbringelementen (vorzugsweise vorauseilend) gesteuert werden.

Es ist insbesondere möglich, dass basierend auf Ist-Positionen der Verteilmaschine, Soll-Positionen z. B. für die Verteilgutabgabe und der Förderzeit zweckmäßig im Wesentlichen optimale Zeitpunkte für die Betätigung (z. B. Steuerung) des zumindest einen Dosierorgans und/oder für die Betätigung (z. B. Steuerung) der Schaltelemente definiert werden können.

Die Soll-Positionen können z. B. mittels eines Verteilgut-Bedeckungsplans und/oder einer Applikationskarte definiert werden. Alternativ oder ergänzend können die Soll-Positionen z.B. mittels eines zeitlich vorgelagerten Abfahrens (optional ergänzt durch einen offset (Versatz)) definiert werden.

Der Verteilerkopf ist vorzugsweise Teil eines Verteilerturms.

Die Verteilmaschine ist vorzugsweise zur Einzelreihen- und/oder Sektionsabschaltung und somit insbesondere zur teilflächenspezifischen Verteilgutausgabe ausgeführt und kann dementsprechend insbesondere Section-Control-Anwendungen ausführen.

Die Verteilmaschine ermöglicht z. B., dass vorauseilend ein Verteilgutmuster ermittelbar ist, das an einer zukünftigen Soll-Position zur Verteilgutausgabe im Wesentlichen förderzeitverzögerungsfrei erzeugt werden kann.

Es ist möglich, dass das Steuersystem dazu eingerichtet ist, die Verteilmaschine (z. B. das zumindest eine Dosierorgan und/oder die Schaltelemente) basierend auf zumindest einem aktuellen Betriebszustand der Verteilmaschine (z. B. vorauseilend) zu steuern.

Der aktuelle Betriebszustand entspricht insbesondere einem Betriebszustand an Ist-Positionen der Verteilmaschine.

Der zumindest eine aktuelle Betriebszustand kann z. B. umfassen: eine aktuelle Schaltstellung der Schaltelemente, eine aktuelle mittels des zumindest einen Dosierorgans dosierte Verteilgutmenge, eine aktuelle Betriebsstellung der Ausbringelemente (z. B. abgesenkt (zweckmäßig aktiv) oder angehoben (zweckmäßig deaktiviert), eine aktuelle Drehzahl (z. B. Drehgeschwindigkeit etc.) der Förderlufterzeugungseinrichtung, und/oder eine aktuelle vorhandene Strömungsgeschwindigkeit (z. B. Förderluftgeschwindigkeit) in einer oder mehreren Ausbringleitungen und/oder der Förderleitung.

Es ist möglich, dass das Steuersystem dazu eingerichtet ist, die Verteilmaschine (z. B. das zumindest eine Dosierorgan und/oder die Schaltelemente) z. B. basierend auf Ist-Positionen der Verteilmaschine und/oder basierend auf Soll-Positionen zur Verteilgutausgabe und insbesondere basierend auf zumindest einer Anpassungsdauer zwischen einem aktuellen Betriebszustand und einem an Soll-Positionen zur Verteilgutausgabe zweckmäßig benötigten Soll-Betriebszustand (z. B. vorauseilend) zu steuern.

Wird z. B. an einer Soll-Position ein abgesenktes Ausbringelement benötigt und befindet sich dieses in der Ist-Position noch in angehobener Position, kann die Steuereinrichtung dazu eingerichtet sein, eine Änderung der Position basierend auf der Anpassungsdauer zwischen abgesenkter Position und angehobener Position einzuleiten, wodurch insbesondere erreicht werden kann, dass eine Verteilgutausgabe nicht bereits erfolgt, wenn das Ausbringelement sich noch nicht in SollStellung-/Betriebszustand (z. B. in Bodenkontakt) befindet.

Bei einem bevorzugten Ausführungsbeispiel kann das Steuersystem dazu eingerichtet sein, Ausbringelemente basierend auf zumindest einer Anpassungsdauer zwischen einem aktuellen Betriebszustand (z. B. ein oder mehrere Ausbringelemente in angehobenem oder abgesenktem Betriebszustand) und einem Soll-Betriebszustand (z. B. ein oder mehrere Ausbringelemente in angehobenem oder abgesenktem Betriebszustand) an Soll-Positionen vorzugsweise vorauseilend zu steuern.

Im Kontext der Erfindung kann die zumindest eine Förderdauer vorzugsweise zumindest eine Förderlänge umfassen. Im Kontext der Erfindung kann z. B. die zumindest eine Förderdauer durch z. B. zumindest eine Förderlänge der Ausbringleitungen charakterisiert werden.

Im Kontext der Erfindung können die Soll-Positionen vorzugsweise Soll-Zeitpunkte umfassen. Im Kontext der Erfindung können z. B. die Soll-Positionen durch z. B. Soll-Zeitpunkte charakterisiert werden.

Im Kontext der Erfindung kann eine Verteilgutausgabe aus den Ausbringelementen auch z. B. eine Unterbrechung der Verteilgutausgabe umfassen, was insbesondere keiner Verteilgutausgabe aus dem entsprechenden Ausbringelement entspricht.

Zu erwähnen ist, dass die zumindest eine Förderdauer vorzugsweise den jeweiligen Leitungsbereich zwischen Ausbringleitungs-Einlass (insbesondere am Verteilerkopf) und Ausbringleitungs-Auslass (insbesondere am Ackerboden) umfasst.

Zu erwähnen ist auch, dass das hierin erwähnte Steuern zweckmäßig z. B. ein Ansteuern und/oder ein Betätigen umfassen kann (z. B. eines dem zu steuernden Bauteil zugeordneten Aktuators, Motors etc.) und/oder zweckmäßig ein Regeln umfassen kann.

Das Steuersystem kann z. B. dazu eingerichtet sein, die Verteilmaschine zu steuern, z. B. vorauseilend.

Die Erfindung betrifft auch ein Verfahren zum Betreiben einer landwirtschaftlichen z. B. pneumatischen Verteilmaschine zum Verteilen zumindest eines körnigen Verteilguts (vorzugsweise eine Verteilmaschine wie hierin offenbart), mit mehreren Ausbringelementen zum Ausgeben des Verteilguts, zumindest einem Verteilerkopf , welcher über zumindest eine Förderleitung (z. B. ein Fördersystem) mit zumindest einem Dosierorgan verbunden ist, wobei der Verteilerkopf mehrere Abgänge aufweist, wobei die Abgänge über jeweils eine Ausbringleitung mit den Ausbringelementen verbunden sind, wobei zumindest einige der Ausbringleitungen mittels jeweils einem Schaltelement geschlossen und/oder geöffnet werden, einem Positionsbestimmungssystem zur Bestimmung von Ist-Positionen der Verteilmaschine, und einem Steuersystem, welches das zumindest eine Dosierorgan und/oder die Schaltelemente steuert.

Das Verfahren zeichnet sich insbesondere dadurch aus, dass das Steuersystem das zumindest eine Dosierorgan und/oder die Schaltelemente basierend auf Soll-Positionen zur Verteilgutausgabe aus den Ausbringelementen und basierend auf zumindest einer Förderdauer des Verteilguts vom Verteilerkopf zu den Ausbringelementen vorzugsweise vorauseilend steuert.

Die Offenbarung zur Verteilmaschine gilt zweckmäßig ebenso entsprechend für das Verfahren.

Die zuvor beschriebenen bevorzugten Ausführungsbeispiele und Merkmale der Erfindung sind zweckmäßig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Figur 1: zeigt eine schematische Ansicht einer landwirtschaftlichen pneumatischen Verteil-maschine,
- Figuren 2 und 3: zeigen insbesondere einen Verteilerkopf mit einem Schaltelement in unterschiedlichen Schaltstellungen,
- Figur 4: zeigt eine perspektivische Ansicht insbesondere eines Verteilerkopfs,
- Figur 5: zeigt insbesondere einen Verteilerkopf mit Schaltelementen in unterschiedlicher Schaltstellung,
- Figuren 6 und 7: zeigen insbesondere Schaltelemente in unterschiedlicher Schaltstellung,
- Figur 8: zeigt insbesondere einen Verteilerkopf,
- Figur 9: zeigt eine perspektivische Ansicht einer Verteilmaschine,
- Figur 10: zeigt eine Seitenansicht eines Teilabschnitts der Verteilmaschine der Figur 9,
- Figur 11: zeigt eine Verteilmaschine an unterschiedlichen Feldpositionen,
- Figur 12: zeigt einen vergrößerten Teilbereich der Figur 11, und
- Figur 13: zeigt eine Draufsicht auf einen Teilabschnitt einer Verteilmaschine.

Die unter Bezugnahme auf die Figuren beschriebenen bevorzugten Ausführungsbeispiele der Erfindung stimmen teilweise überein, wobei ähnliche oder identische Teile mit den gleichen Bezugszeichen versehen sind und zu deren Erläuterung auch auf die Beschreibung anderer Ausführungsbeispiel verwiesen werden kann.

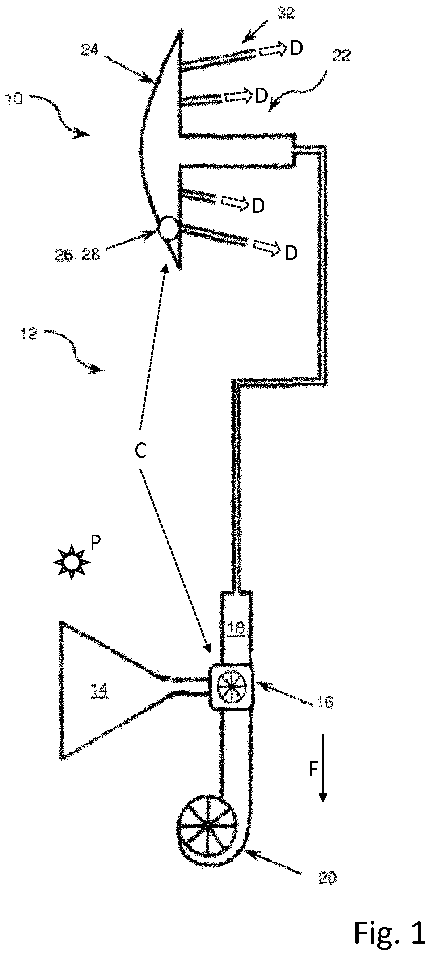

Figur 1 zeigt eine schematische Ansicht einer landwirtschaftlichen pneumatischen Verteilmaschine 12. Die Verteilmaschine 12 kann vorzugsweise zumindest teilweise gemäß WO 2017 / 055 266 A1 ausgebildet sein.

Die Fig. 1 zeigt in einer schematischen Ansicht insbesondere einen Verteilerturm 10, der in der landwirtschaftlichen Verteilmaschine 12 verbaut ist. Bei dieser Verteilmaschine 12 handelt es sich um eine Sämaschine, welche zum Verteilen von insbesondere körnigem (z.B. granulatartigem) Verteilgut wie z. B. Saatgut, Dünger oder dergl. Verwendung findet. Die Verteilmaschine 12 besitzt einen Vorratsbehälter 14 zum Bevorraten und Bereitstellen des jeweils auszubringenden Verteilgutes. Der Vorratsbehälter 14 ist z. B. trichterförmig ausgebildet, wobei diesem vorzugsweise an dessen tiefster Position zumindest ein Dosierorgan (z. B. eine Dosiervorrichtung) 16 zugeordnet ist. Mittels des Dosierorgans 16 wird das jeweils auszubringende Verteilgut in einer gewünschten Menge in eine mit einem Luftvolumenstrom beaufschlagte Förderleitung (z. B. Leitungssystem) 18 gleichmäßig dosiert. Der Luftvolumenstrom wird mit einer der Förderleitung 18 ebenfalls zugeordneten Förderlufterzeugungseinrichtung in Form eines Gebläses 20 erzeugt. Durch das Beimengen von Verteilgut in den Luftvolumenstrom, entsteht ein Verteilgut-Luftvolumenstrom. Mit Hilfe des Luftvolumenstroms wird das Verteilgut über die Förderleitung 18 in Richtung des Verteilerturms 10 befördert. Der Verteilerturm 10 weist hierbei zunächst ein senkrecht verlaufendes Steigrohr 22 auf, an dessen oberen Ende ein Verteilerkopf 24 mit einer Mehrzahl von an dessen Umfang gleichmäßig angebrachten Abgängen 26 anschließt. Im Verteilerkopf 24 erfährt der Verteilgut-Luftvolumenstrom zunächst eine Richtungsumkehr aus einer Bewegung entlang des Steigrohrs 22 in eine Bewegung in Richtung der Abgänge 26, wobei hierbei der einzelne zentrale Verteilgut-Luftvolumenstrom in eine Mehrzahl, entsprechend der Anzahl der Abgänge 26, von Verteilgut-Teil-Luftvolumenströmen aufgeteilt wird.

Wenigstens einem der Abgänge 26 ist eine hier schematisch dargestellte Absperreinheit 28 mit einem hier nicht dargestellten Schaltelement 30 zugeordnet. An den Abgängen 26 ist jeweils wenigstens eine Ausbringleitung (z. B. Verteilgutleitung, insbesondere Saatleitung) 32 angeordnet, mittels derer das Verteilgut aus dem Verteilerkopf 24 hin zu Ausbringelementen D (z. B. Säschare, insbesondere Scheibenschare oder Zinkenschare, oder dergl.) zum Ausbringen des Verteilguts auf ein Feld, Acker etc. transportiert wird.

Zu erwähnen ist, dass das Steigrohr 22 auch z. B. als Senkrohr ausgeführt sein kann, mit z. B. einem Verteilerkopf 24 an dessen unterem Ende. Auch könnte das Steigrohr 22 schräg, insbesondere liegend, ausgeführt sein und an dessen seitlichen Ende wiederum ein Verteilkopf 24 angebracht sein.

Die Verteilmaschine 12 umfasst ein z. B. eine Rechen-/Datenverarbeitungseinheit und eine Speichereinheit umfassendes Steuersystem C, welches dazu eingerichtet ist, das Dosierorgan 16 und/oder die Schaltelemente 30 und z. B. zweckmäßig die Verteilmaschine 12 zu steuern. Das Dosierorgan 16 kann dadurch z. B. aktiviert oder deaktiviert werden und/oder dessen Rotationsgeschwindigkeit verändert werden. Die Schaltelemente 30 können dadurch in unterschiedliche Schaltstellungen gebracht werden, z. B. um eine Verteilgutweiterleitung zu den Ausbringelementen D zu ermöglichen und/oder zu unterbinden.

Die Rechen-/Datenverarbeitungseinheit kann z. B. auf auf der Speichereinheit hinterlegte Daten zurückgreifen, wobei das Steuersystem C auch z. B. einen Task Controller umfassen kann.

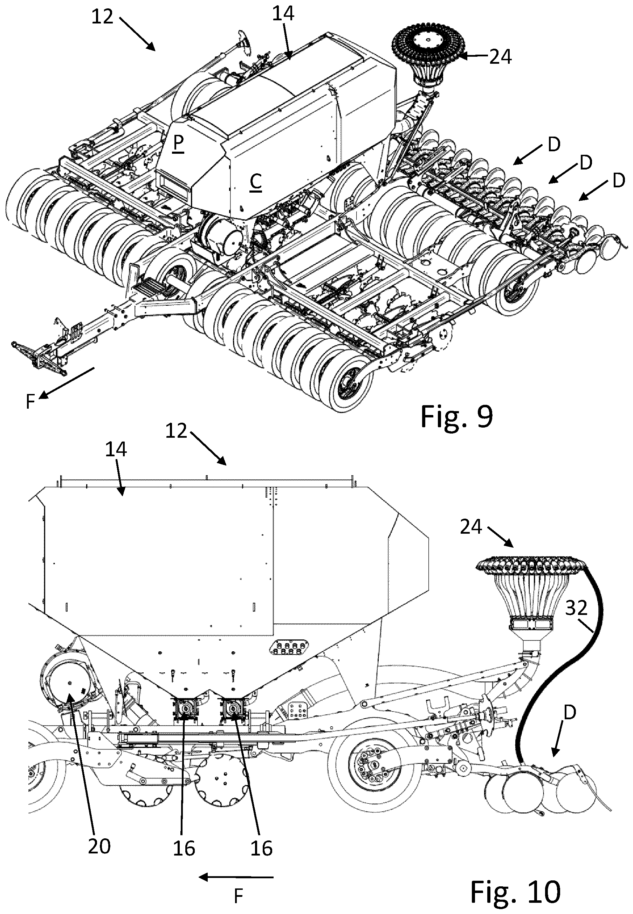

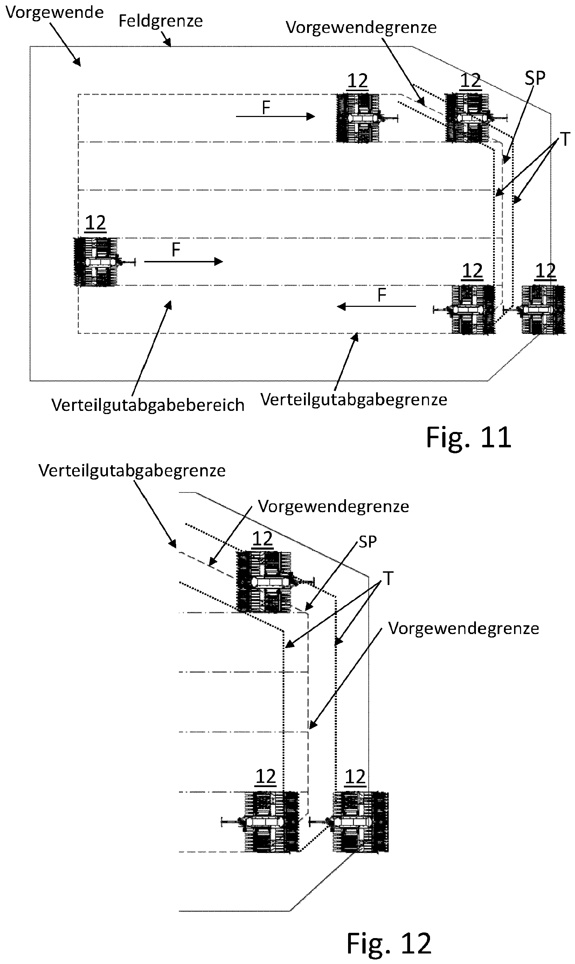

Eine Besonderheit ist, dass die Verteilmaschine 12 ein Positionsbestimmungssystem (z. B. Global Positionen System (GPS), Differential Global Positioning System (DGPS) oder Real Time Kinematic System (RTK-System)) P zur Bestimmung von Ist-Positionen der Verteilmaschine 12 umfasst und das Steuersystem C dazu eingerichtet ist, das Dosierorgan 16 und/oder die Schaltelemente 30 basierend auf insbesondere zukünftigen Soll-Positionen SP (z. B. Figuren 10 und 11) zur Verteilgutausgabe aus den Ausbringelementen D und basierend auf zumindest einer Förderdauer des Verteilguts vom Verteilerkopf 24 zu den Ausbringelementen D vorzugsweise vorauseilend zu steuern. Das Dosierorgan 16 und/oder die Schaltelemente 30 können z. B. basierend auf vom Positionsbestimmungssystem P bestimmten Ist-Positionen der Verteilmaschine 12 relativ zu Soll-Positionen SP zur Verteilgutausgabe aus den Ausbringelementen D vorzugsweise vorauseilend gesteuert werden.

Die Soll-Positionen SP können (z. B. durch einen Nutzer (z. B. Landwirt)) vordefinierbar sein und insbesondere eine Verteilgutabgabegrenze umfassen, vorzugsweise eine z. B. virtuelle Feldgrenze (z. B. Ackergrenze) und/oder eine Vorgewendegrenze (z. B. Figuren 10 und 11). Die Verteilgutabgabegrenze kann z. B. relativ zur Fahrtrichtung F der Verteilmaschine 12 quer verlaufen (z. B. im Wesentlichen rechtwinklig und/oder im Wesentlichen schräg, je nach Feldverlauf z. B. im Wesentlichen geradlinig, bogenförmig und/oder oder kurvenförmig).

Das Steuersystem C ist zweckmäßig dazu eingerichtet, das Dosierorgan 16 und/oder die Schaltelemente 30 so zu steuern, dass ein an die Verteilgutabgabegrenze im Wesentlichen angenähertes Verteilgutmuster (z.B. Spitzen, Keile, Ecken oder dergl.) erzeugt wird, insbesondere, um eine unerwünschte Verteilgutausgabe über die Verteilgutabgabegrenze hinaus zumindest zu reduzieren und/oder um unerwünschte Verteilgut-Fehlstellen innerhalb der Verteilgutabgabegrenze zumindest zu reduzieren.

Das Dosierorgan 16 und/oder die Schaltelemente 30 können z. B. auch basierend auf einer (vorzugsweise manuell eingebbaren) zweckmäßig beliebig definierbaren Verteilgut-Ausbringmenge (z. B. Kilogramm pro Hektar oder Körner pro Quadratmeter) und/oder einer (vorzugsweise manuell eingebbaren) zweckmäßig beliebig definierbaren Verteilgutsorte (z. B. Weizen, Roggen oder unterschiedliche Weizensorten-/Arten etc.) insbesondere vorauseilend gesteuert werden.

Die Verteilmaschine 12 kann z. B. eine Eingabeeinrichtung (z. B. eine Tastatur, ein Tablet, ein Computer, ein Touchscreen, eine Daten-Schnittstelle (z. B. Bluetooth, USB etc.) etc.) umfassen, mittels der die Verteilgut-Ausbringmenge, die Verteilgutsorte, die Soll-Positionen SP und/oder der weiter unten erwähnte Toleranzbereich T eingegeben und dadurch vordefiniert werden können und dem Steuersystem C zur weiteren Verarbeitung zur Verfügung gestellt werden können.

Das Steuersystem C ist dazu eingerichtet ist, das Dosierorgan 16 und/oder die Schaltelemente 30 basierend auf einer Fahrgeschwindigkeit der Verteilmaschine 12 zu steuern.

Besonders vorteilhaft ist, dass das Steuersystem C das Dosierorgan 16 und/oder die Schaltelemente 30 basierend auf sich verändernden und somit unterschiedlichen Fahrgeschwindigkeiten der Verteilmaschine 12 steuern kann. Ein Beschleunigen der Verteilmaschine 12 kann z. B. zu einem zeitlich früheren Steuern des Dosierorgans 16 und/oder der Schaltelemente 30 führen, wobei ein Abbremsen der Verteilmaschine 12 zu einem zeitlich späteren Steuern des Dosierorgans 16 und/oder der Schaltelemente 30 führen kann.

Das Steuersystem C kann die Verteilmaschine 12 (z. B. Aktuatoren, Stellglieder, Motoren, das zumindest eine Dosierorgan 16 und/oder die Schaltelemente 30) vorzugsweise auch basierend auf zumindest einem aktuellen Betriebszustand der Verteilmaschine 12 steuern, z. B. basierend auf einer aktuellen Schaltstellung der Schaltelemente 30 (z. B. vollständig geöffnet oder vollständig geschlossen und optional zumindest einer Zwischenstellung zwischen vollständig geöffneter und vollständig geschlossener Schaltstellung), einer aktuellen mittels des zumindest einen Dosierorgans 16 dosierten Verteilgutmenge (z. B. Drehgeschwindigkeit, Drehzahl etc. des Dosierorgans 16), einer aktuellen Betriebsstellung der Ausbringelemente D (z. B. abgesenkt und aktiv oder angehoben und deaktiviert), einer aktuellen Drehzahl (z. B. Drehgeschwindigkeit etc.) der Förderlufterzeugungseinrichtung 20 (z. B. Strömungs-/ Förderluftgeschwindigkeit) und/oder einer aktuellen Strömungsgeschwindigkeit (z. B. Förderluftgeschwindigkeit) in einer oder mehreren Ausbringleitungen 32 und/oder der Förderleitung 18. Der aktuelle Betriebszustand entspricht insbesondere einem Betriebszustand an Ist-Positionen der Verteilmaschine 12.

In einem vorteilhaften Ausführungsbeispiel kann das Steuersystem C dazu eingerichtet sein, die Verteilmaschine 12 (z. B. Aktuatoren, Stellglieder, Motoren, das zumindest eine Dosierorgan 16 und/oder die Schaltelemente 30) basierend auf zumindest einer Anpassungsdauer zwischen einem aktuellen Betriebszustand an Ist-Positionen der Verteilmaschine 12 und einem Soll-Betriebszustand an Soll-Positionen SP zu steuern, insbesondere basierend auf zumindest einer Anpassungsdauer, die erforderlich ist, eine oder mehrerer Ausbringelemente D von einem angehobenen Zustand (Stellung) in einen abgesenkten Zustand (Stellung) oder umgekehrt zu bringen.

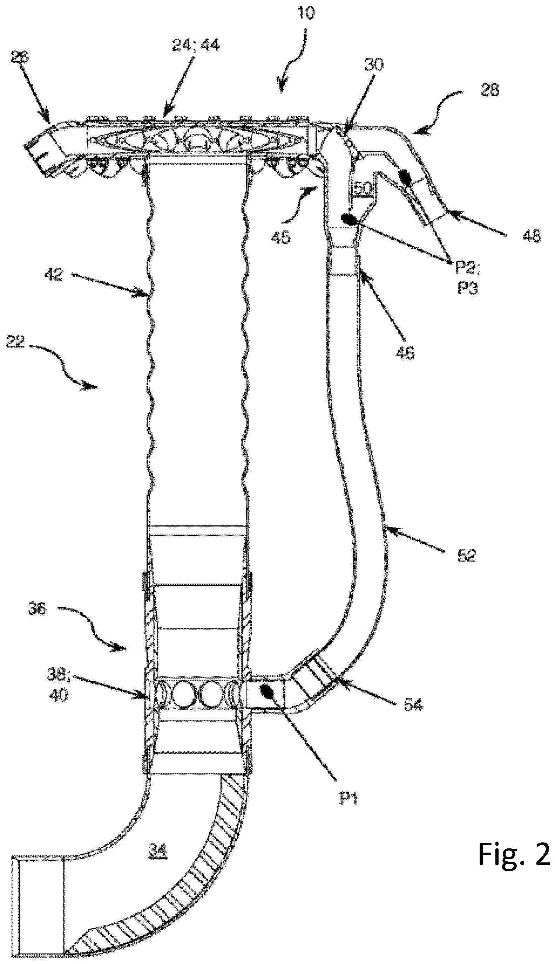

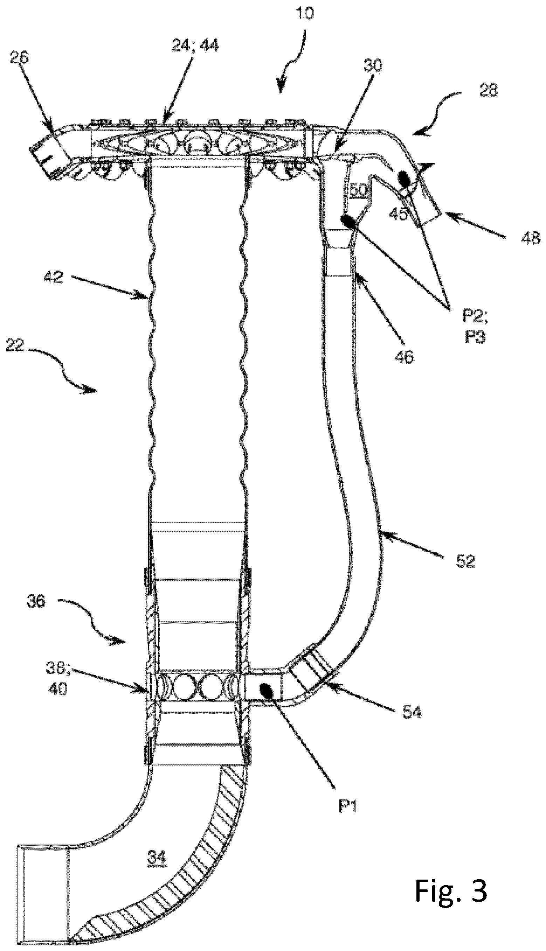

Die Figuren 2 und 3 zeigen in verschiedenen Ansichten eine Ausführungsvariante eines Verteilerkopfs 24 am Verteilerturm 10.

Der Verteilerturm 10 umfasst z. B. ein Steigrohr 22, an dessen oberem Ende der Verteilerkopf 24 anschließt. Am Umfang des Verteilerkopfes 24 sind in im Wesentlichen regelmäßigen Abständen eine Mehrzahl von Abgängen 26 angeordnet. Der Verteilerturm 10 weist zunächst ein bogenförmiges Übergangsstück 34 auf. Mittels diesem erfolgt eine Richtungsumkehr des Verteilgut-Luftvolumenstroms aus einer weitgehend waagerechten in eine senkrechte Strömungsrichtung. An das Übergangsstück 34 schließt das Steigrohr 22 an. Dieses besteht aus verschiedenen Abschnitten.

Zunächst besitzt dieses eine Düse 36. Mittels dieser wird der Querschnitt des Steigrohrs 22 zunächst konisch verringert und anschließend wiederum konisch vergrößert. Vorzugsweise an der Stelle mit dem geringsten Querschnitt befinden sich Rückführeinrichtungen 38 in Form von ringförmigen Öffnungen 40. Mittels der Querschnittsverringerung soll der Verteilgut-Luftvolumenstrom im Steigrohr 22 zentriert werden. Dies soll durch ein an die Düse 36 anschließendes Wellrohr 42 noch weiter verbessert werden. Neben einem Wellrohr 42 wären auch andere Rohre mit Querschnittsverringerungen vorstellbar, bspw. derartige, bei denen Vertiefungen vorhanden sind. Auch wäre es denkbar, das Wellrohr 42 bspw. durch eine weitere Düse 36 zu ersetzen, so dass das Steigrohr bspw. aus zwei Düsen oder mehr zusammengesetzt ist. Die einzelnen Abschnitte des Steigrohrs 22 können jeweils bspw. mittels Schweißung oder mittels Klemmstücken verbunden werden. Ebenso können die Abschnitte aus einem metallischen oder nicht metallischen Werkstoff gebildet sein. Auch könnte das Steigrohr 22 einteilig und bspw. aus Kunststoff gefertigt sein und/oder z. B. als Senk- oder Schrägrohr ausgebildet sein. Am oberen Ende des Steigrohrs 22 schließt ein vorzugsweise im Wesentlichen kreisförmiger Verteilerkopf 24 an. Dieser weist beispielhaft einen flachen Deckel 44 auf. Der Verteilerkopf 24 könnte jedoch auch verschiedenste andere Formen aufweisen, z. B. pilzförmige oder dergl.

Im Verteilerkopf 24 wird der Verteilgut-Luftvolumenstrom aus einer senkrechten in eine waagrechte Richtung in Richtung der Abgänge 26 umgelenkt, wobei hierzu das Verteilgut bspw. gegen den Deckel 44 prallen kann und anschließend durch den Luftvolumenstrom in Richtung der Abgänge 26 geleitet wird. Je gleichmäßiger diese Verteilung zwischen den Abgängen 26 erfolgt, desto gleichmäßiger ist die Querverteilung des Verteilguts an der Verteilmaschine 12. Um die Verteilgutabgabe in einzelnen Abgängen 26 abschalten bzw. unterbinden zu können, kann zumindest einem der Abgänge 26 z. B. eine Absperrvorrichtung 28 zugeordnet werden. Innerhalb dieser ist ein vorzugsweise schwenkbares Schaltelement (z. B. eine Weiche oder Klappe) 30 angeordnet. Das Schaltelement 30 kann hierbei, bspw. mittels eines elektrischen und/oder pneumatischen und/oder hydraulischen und/oder dergl. Stellantriebs zwischen einer geschlossenen Position (vergl. Fig. 2) und einer geöffneten Position (vergl. Fig. 3) verschwenkt werden.

Die Absperrvorrichtung 28 besitzt neben einem Schaltelement 30 noch einen Rückführbereich 45 in Form z. B. eines Rückführanschlusses 46, einen Ausbringleitungsanschluss (z. B. Saatleitungsanschluss) 48 sowie einen Bypass 50. Am Rückführanschluss 46 wird eine Rückleitung 52 angeschlossen, welche mit deren unterem Ende über einen Stutzen 54 in die Rückführeinrichtung 38 mündet. Wird bspw. das Schaltelement 30 geschlossen (vergl. Fig. 2) wird der Verteilgut-Luftvolumenstrom in der Absperrvorrichtung 38 in Richtung des Rückführbereiches 45 umgeleitet und anschließend über eine an einem Rückführanschluss 46 angebrachte Rückleitung 52 und der Rückführeinrichtung 38 wieder in das Steigrohr 22 geleitet. Das rückgeführte Verteilgut wird anschließend wieder vom Verteilgut-Luftvolumenstrom im Steigrohr 22 aufgenommen und wiederum zum Verteilerkopf 24 und zu den Abgängen 26 befördert.

Wenn auch eine schwenkbare Klappe oder Weiche als Schaltelement 30 gezeigt ist, so kann das Schaltelement 30 auch durchaus andere Ausgestaltungen aufweisen. So eignet sich bspw. auch ein Kugelhahn o. dgl. als motorisch verstellbares Schaltelement 30. Auch pneumatische Schaltelemente 30 wären jedoch denkbar.

Um auch bei mehreren abgesperrten Schaltelementen 30 noch ein gewünschtes Querverteilungsergebnis zu erreichen, ist es erforderlich, dass trotz dieser in den Komponenten des Verteilerturms 22 jeweils ein zumindest weitgehend gleiches bzw. konstantes Druckniveau bzw. ein weitgehend gleicher bzw. konstanter Luftvolumenstrom, bzw. weitgehend gleiche bzw. konstante Strömungsgeschwindigkeiten unabhängig von der Stellung des Schaltelements 30, vorherrschen. Um dies zu erreichen, sind das Steigrohr 22, der Verteilerkopf 24, die Rückführeinrichtung 38, der Rückführbereich 45, der Bypass 50, sowie der Ausbringleitungsanschluss 48 vorzugsweise permanent pneumatisch verbunden, unabhängig von der Stellung des Schaltelements 30. Dies wird insbesondere durch den sich in der Absperrvorrichtung 28 befindlichen Bypass 50 gewährleistet. Somit stellen sich im Verteilerturm 24 diverse Druckniveaus ein, wobei sich in der Rückführeinrichtung 38 ein Druckniveau P1 und am Schaltelement 30, in der Absperrvorrichtung 28 bzw. im Bypass 50 ein Druckniveau P2 und/oder P3 ergibt, wobei P1 kleiner oder gleich zu P2 und/oder P3 ist.

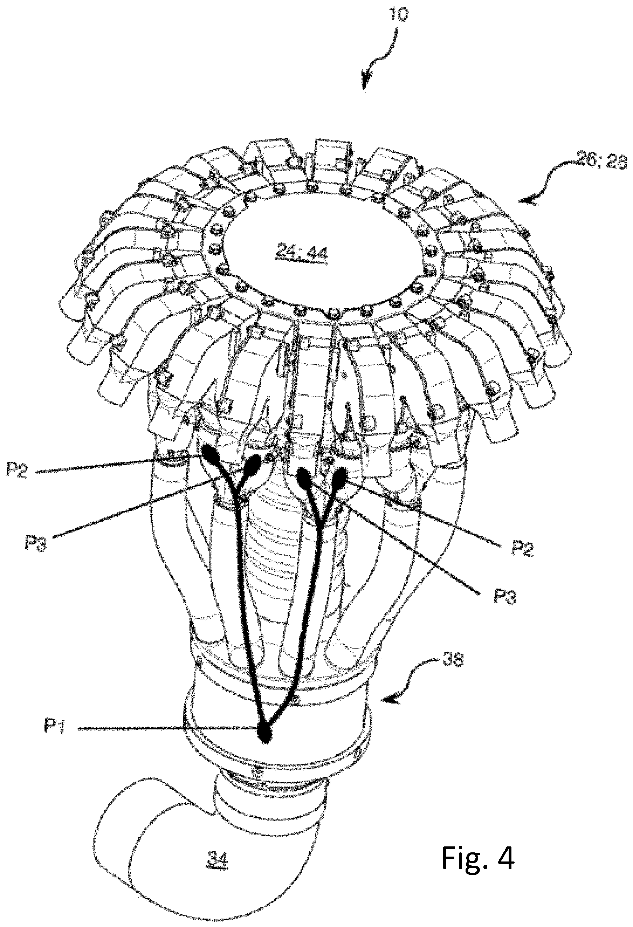

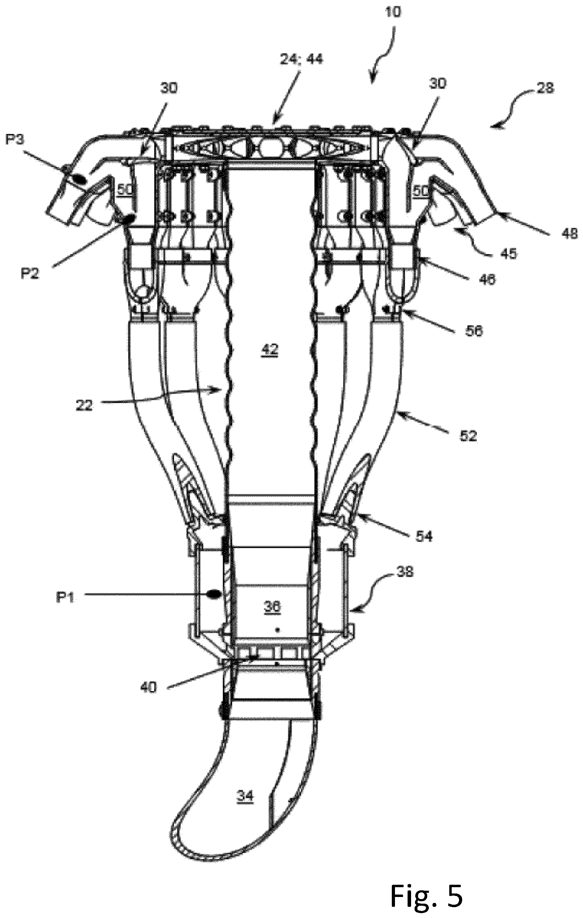

Ein weiteres Ausführungsbeispiel insbesondere eines Verteilerkopfs 24 zeigen die Figuren 4 und 5, wobei die Fig. 4 diesen in einer Perspektivansicht und die Fig. 5 diesen in einer Seitenansicht im Schnitt zeigen. Der Verteilerturm 10 besteht im Wesentlichen aus einem Steigrohr 22, an dessen oberen Ende ein Verteilerkopf 24 anschließt. Am Umfang des Verteilerkopfes 24 sind in regelmäßigen Abständen eine Mehrzahl von Abgängen 26 angeordnet.

Der Verteilerturm 10 weist zunächst ein bogenförmiges Übergangsstück 34 auf, mittels diesem erfolgt eine Richtungsumkehr des Verteilgut-Luftvolumenstroms aus einer weitgehend waagerechten in eine senkrechte Strömungsrichtung. An das Übergangsstück 34 schließt ein Steigrohr 22 an, welches Steigrohr 22 zunächst einen Düsenabschnitt bzw. eine Düse 36 aufweist. Mittels dieser Düse 36 wird der Querschnitt des Steigrohrs 22 konisch verringert und anschließend wieder konisch vergrößert. Mittels der Düse 36 soll der Verteilgut-Luftvolumenstrom im Steigrohr 22 zentriert werden, wodurch eine anschließende gleichmäßige Aufteilung dieses im Verteilerkopf 24 verbessert werden soll. Weiter verbessert werden soll diese Zentrierung nochmals über einen der Düse nachgeordneten im Ausführungsbeispiel als Wellrohr 42 ausgebildeten Rohrabschnitt. Neben einem Wellrohr 42 wären auch andere Rohrabschnitte mit Querschnittsverringerungen vorstellbar, bspw. derartige bei denen nur jeweils einzelne Vertiefungen vorhanden sind. Auch wäre es denkbar, das Wellrohr 42 bspw. durch eine weitere Düse 36 zu ersetzen, so dass das Steigrohr 22 bspw. aus zwei Düsen oder mehr zusammengesetzt ist. Die einzelnen Abschnitte des Steigrohrs 22 können jeweils bspw. mittels Schweißung oder mittels Klemmstücken verbunden werden. Ebenso können die Abschnitte aus einem metallischen oder nicht metallischen Werkstoff gebildet sein. Auch könnte das Steigrohr 22 einteilig und bspw. aus Kunststoff gefertigt sein oder z. B. als Senk- oder Schrägrohr ausgebildet sein.

Am oberen Ende des Steigrohrs 22 schließt ein kreisförmiger Verteilerkopf 24 an, wobei dieser einen flachen Deckel 44 besitzt. Im Verteilerkopf 24 wird der Verteilgut-Luftvolumenstrom aus einer senkrechten in eine waagrechte Richtung, in Richtung der Abgänge 26 umgelenkt, wobei hierzu das Verteilgut bspw. gegen den Deckel 44 prallen kann und anschließend durch den Luftvolumenstrom in Richtung der Abgänge 26 geleitet wird. Je gleichmäßiger diese Verteilung zwischen den Abgänge 26 erfolgt, desto gleichmäßiger ist die Querverteilung des Verteilguts an der landwirtschaftlichen Maschine.

Um die Verteilgutabgabe in einzelnen Abgängen 26 abschalten bzw. unterbinden zu können, ist jedem der Abgänge 26 vorzugsweise eine Absperrvorrichtung 28 zugeordnet. Innerhalb dieser ist ein Schaltelement 30 angeordnet. Das Schaltelement 30 kann, bspw. mittels eines elektrischen und/oder pneumatischen und/oder hydraulischen und/oder dergl. Stellantriebes zwischen einer geschlossenen Position (vergl. Fig. 5 rechts) und einer geöffneten Position (vergl. Fig. 5 links) verschwenkt werden.

Die Absperrvorrichtung 28 kann neben einem Schaltelement 30 z. B. noch einen Rückführbereich 45, einen Rückführanschluss 46, einen Ausbringleitungsanschluss 48 und/oder einen Bypass 50 umfassen. Am Rückführanschluss 46 wird zunächst ein Sammelstück 56 angeschlossen. Dieses ist im Ausführungsbeispiel y-förmig ausgebildet und verbindet jeweils zwei Rückführanschlüsse 46 bzw. zwei Absperrvorrichtungen 28. An das Sammelstück 56 wird darüber hinaus eine Rückleitung 52 angeschlossen, welche mit deren unterem Ende über einen Stutzen 54 in eine Rückführeinrichtung 38 mündet. Mit Hilfe der Sammelstücke 56 kann die Anzahl an Rückleitungen 52 erheblich verringert werden, wobei hier wenigstens zwei aber auch mehr Rückleitungen 52 verbunden werden können.

Die Rückführeinrichtung 38 wird von einem kreisförmigen die Düse 36 bzw. das Steigrohr 22 umgebenden Rohr gebildet, wobei der Düse 36 im Bereich von deren geringsten Umfang eine Vielzahl von z. B. rechteckigen Öffnungen 40 zugeordnet sind, welche eine Verbindung zwischen dem Steigrohr 22 bzw. der Düse 36 und der Rückführeinrichtung 38 herstellen. Durch die Anordnung der Öffnungen 40 im Bereich der Düse 36 entsteht an den Öffnungen eine Saugwirkung, wodurch die Saatgutrückführung aus der Rückführeinrichtung 38 in das Steigrohr 22 noch weiter verbessert wird. Wird das Schaltelement 30 geschlossen (Fig. 5 rechts), wird der Verteilgut-Luftvolumenstrom in der Absperrvorrichtung 38 in Richtung des Rückführbereiches 45 umgeleitet und mittels des Rückführanschlusses 46, der Sammelstücke 56, der Rückleitung 52 und der Rückführeinrichtung 38 wieder in das Steigrohr 22 geleitet. Das rückgeführte Verteilgut wird anschließend wieder vom Verteilgut-Luftvolumenstrom im Steigrohr 22 zum Verteilerkopf 24 und zu den Abgänge 26 befördert.

Um auch bei wenigstens einem geschlossenen Schaltelement 30 noch ein gewünschtes Querverteilungsergebnis zu erreichen, ist es erforderlich, dass trotz dieser der Druck P1 in der Rückführeinrichtung 38 bzw. am Stutzen 54 kleiner oder gleich dem Druck P2/P3 im Bypass 50 bzw. im Rückführbereich 45 ist. Um dies zu erreichen, sind das Steigrohr 22, der Verteilerkopf 24, die Rückführeinrichtung 38, der Rückführbereich 45, der Bypass 50, sowie der Ausbringleitungsanschluss 48 permanent pneumatisch verbunden, unabhängig der Stellung bzw. Position des Schaltelements 30. Dies wird insbesondere durch den sich in der Absperrvorrichtung 28 befindlichen Bypass 50 gewährleistet. Somit stellen sich im Verteilerturm 24 diverse Druckniveaus ein, wobei sich in der Rückführeinrichtung 38 ein Druckniveau P1 und in der Absperrvorrichtung 28 bzw. im Rückführbereich 45 ein Druckniveau P2 bzw. P3 ergibt, und wobei P1 in Bezug auf P2 und P3 weitgehend kleiner oder gleich ist, unabhängig der Anzahl geschlossener Schaltelemente 30. Die Druckverbindung im Verteilerturm 10 wird durch die Linien in Fig. 4 nochmals verdeutlicht, in der, das Steigrohr 22 umgebenden Rückführeinrichtung 38 ein Druckniveau P1 herrscht.

Mittels der am Umfang der Rückführeinrichtung 38 angebrachten Stutzen 54, der Rückleitung 52, der Sammelstücke 54, der Rückführanschlüsse 46, sowie des Bypasses 50, herrscht jeweils eine pneumatische Verbindung zwischen diesen Komponenten, wodurch sich in den Absperrvorrichtungen 28 jeweils ein Druckniveau P2 und/oder P3 einstellt. Dieses Druckniveau herrscht insbesondere auch im Bereich des Ausbringleitungsanschlusses 48, wobei hierbei wiederum P1 zu P2 und/oder P3 jeweils weitgehend kleiner oder gleich ist, unabhängig von der Anzahl an geschlossenen Schaltelementen 30 bzw. Abgängen 26. Dadurch wird es ermöglicht, beliebig viele Abgänge 26 am Verteilerturm 10 zu schließen, ohne dass sich die Querverteilung merklich ändert.

Um dies noch zu verbessern, kann in Abhängigkeit der Anzahl an verschlossenen Abgängen 26 jeweils das vom Dosierorgan 16 in die Förderleitung 18 dosierte Verteilgut entsprechend verringert werden, wobei dies erst ab einer gewissen Anzahl von verschlossenen Abgängen 26, bspw. fünf Abgängen 26 erforderlich ist.

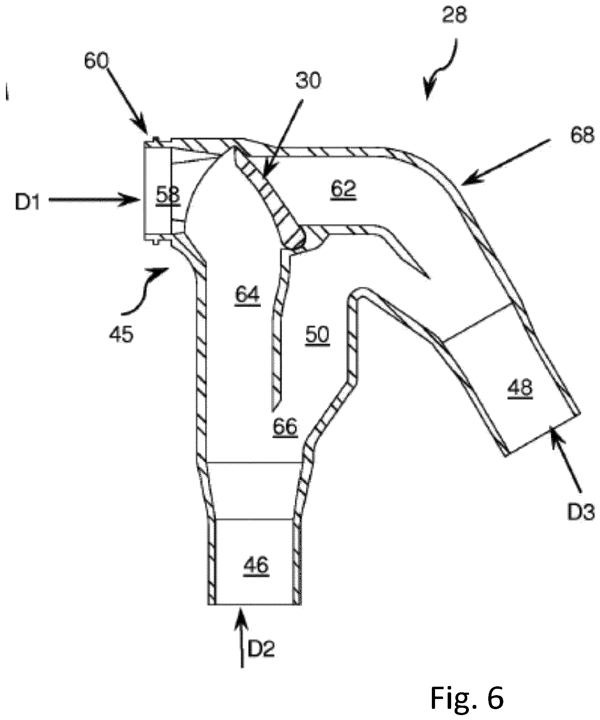

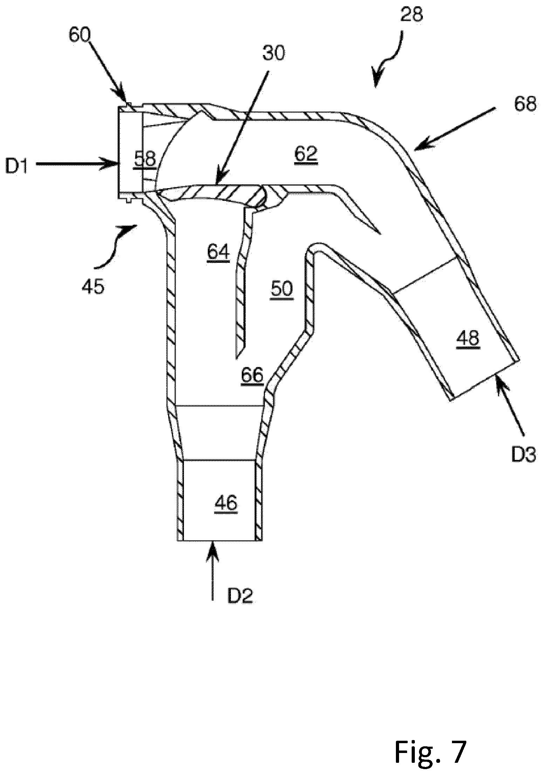

Eine mögliche Ausgestaltung eines Schaltelements 30 zweckmäßig integriert in eine Absperrvorrichtung 28 geht aus den Figuren 6 und 7 hervor, wobei das Schaltelement 30 in Fig. 6 in geschlossener und in Fig. 7 in geöffneter Position abgebildet ist. Die Absperrvorrichtung 28 umfasst z. B. eine Flanschfläche 58 zur Montage dieser an den jeweiligen Abgängen 26 des Verteilerkopfs 24. Hierzu sind an der Flanschfläche 58 bspw. Einrastelemente 60 vorhanden. Mittels dieser Einrastelemente 60 kann eine einfache und schnelle Montage am Verteilerkopf 24 ermöglicht werden. Die Absperrvorrichtung 28 weist darüber hinaus einen Rückführbereich 45, welcher sich vorzugsweise aus einem Rückführanschluss 46 und einem sich zwischen der Flanschfläche 58 und dem Rückführanschluss 46 erstreckenden Rücklaufkanal 64 zusammensetzt, einen Ausbringleitungsanschluss 48 und einen sich zwischen der Flanschfläche 58 und dem Ausbringleitungsanschluss 48 ersteckenden Verteilgutkanal (insbesondere Saatgutkanal) 62, auf, wobei sich zwischen dem Rückführanschluss 46 und dem Ausbringleitungsanschluss 48 darüber hinaus ein Bypass 50 erstreckt. Die Flanschfläche 58, der Rückführanschluss 46 sowie der Ausbringleitungsanschluss 48 besitzen im Wesentlichen den gleichen Außendurchmesser D1; D2; D3 von bspw. 30mm, wobei diese auch größer oder kleiner gewählt werden könnten und wobei diese auch unterschiedlich zueinander sein könnten. Nach der Flanschfläche 58 folgt ein Schaltelement 30, welches zwischen einer geschlossenen Position (vergl. Fig. 6) und einer geöffneten Position (vergl. Fig. 7) verschwenkt werden kann.

Dieses Verschwenken erfolgt vorzugsweise mittels eines elektrischen und/oder pneumatischen und/oder hydraulischen und/oder dergl. Stellantriebes. Die Ansteuerung des Stellantriebs erfolgt zweckmäßig über das Steuersystem C (z. B. Rechnereinheit). Dieses kann wiederum bspw. durch manuelle Eingabe oder auf Basis von Positionsdaten der Verteilmaschine 12 entsprechende Signale an den Stellantrieb übermitteln. Je nach Stellung des Schaltelements 30 kann der Verteilgut-Luftvolumenstrom bei geöffneter Position in Richtung des Ausbringleitungsanschlusses 48 sowie in Richtung eines jeweiligen Ausbringelements D gefördert werden, oder bei geschlossener Position in Richtung des Rückführanschlusses 46 sowie in Richtung des Steigrohrs 22 gefördert und somit rückgeführt und/oder zirkuliert werden.

Der Verteilgutkanal 62 und der Rücklaufkanal 64 sind rechtwinkelig zueinander angeordnet, wobei wiederum der Verteilgutkanal 62 waagerecht zur Flanschfläche 58 sowie der Rücklaufkanal 64 parallel zur Flanschfläche 58 angeordnet sind. Weiterhin sind im Ausführungsbeispiel der Figuren 6 und 7 der Verteilgutkanal 62 und der Rücklaufkanal 64 über das Schaltelement 30 weitgehend pneumatisch getrennt, wobei dies nicht zwingend erforderlich ist, da auch das Schaltelement 30 bei entsprechender Ausgestaltung als Bypass dienen kann.

Parallel zum Verteilgutkanal 62 sowie zum Rücklaufkanal 64 erstreckt sich ein Bypass 50, welcher den Rückführanschluss 46 sowie den Ausbringleitungsanschluss 48 pneumatisch verbindet. Der Bypass 50 ist derartig angeordnet, dass dieser einen Abscheider bzw. einen Abscheidebereich 66 in Form eines Umlenkabscheiders bildet. Der Umlenkabscheider weist hierbei einen Winkel von ca. 180° auf, wodurch ein Entweichen von Verteilgut über den Bypass 50 verhindert werden kann. Der Abscheidegrad muss hierbei möglichst hoch sein, so dass bei geschlossenem Schaltelement 30 das Verteilgut in Richtung des Rückführanschlusses 46 zurück in das Steigrohr 22 geleitet wird, und wobei der Luftvolumenstrom jedoch über den Bypass 50 in Richtung des Ausbringleitungsanschlusses 48 entweichen kann. Die Trennung zwischen Verteilgut und einem Anteil des Luftvolumenstroms erfolgt über den Abscheidebereich 66.

Der Bypass 50 weist einen Querschnitt auf, der derartig gewählt ist, dass dieser bei geschlossenem Schaltelement 30 einen möglichst gleichen Strömungswiderstand aufweist, wie der Verteilgutkanal 62 bei geöffnetem Schaltelement 30. Der Querschnitt bzw. die Breite des Bypasses 50 beträgt hierbei bspw. 30mm oder 25mm oder 20mm. Somit ist bspw. der Strömungswiderstand in einem Pfad entlang der Flanschfläche 58, des Rücklaufkanals 64, des Abscheidebereiches 66, dem Bypass 50 und dem Ausbringleitungsanschluss 48, weitgehend gleich zu einem Strömungswiderstand in einem Pfand entlang der Flanschfläche 58, des Verteilgutkanals 62 und dem Ausbringleitungsanschluss 48.

Die Außenkontur des Verteilgutkanals 62 weist darüber hinaus eine Umlenkkontur 68 auf. Mittels dieser erfolgt eine Richtungsänderung des Verteilgut-Luftvolumenstroms aus einer bspw. waagerechten in eine Richtung entlang der Saatleitung. Dieser Umlenkkontur 68 könnte bspw. ein Prallsensor zugeordnet sein, mittels welchem die Anzahl und/oder die Menge an passierenden Körnern des Verteilguts ermittelt wird. Auch könnten hier optische Sensoren vorgesehen sein. In einer bevorzugten Ausführungsform könnte die Stellung der Weiche 30 entsprechend der Werte des Sensors verstellt werden, d.h. ermittelt der Sensor, dass eine gewünschte Menge an Verteilgut überschritten wird, schließt das Schaltelement 30 bzw. nimmt das Schaltelement 30 eine Position ein, in der mehr Verteilgut in Richtung des Rückführbereiches 45 geleitet wird und umgekehrt.

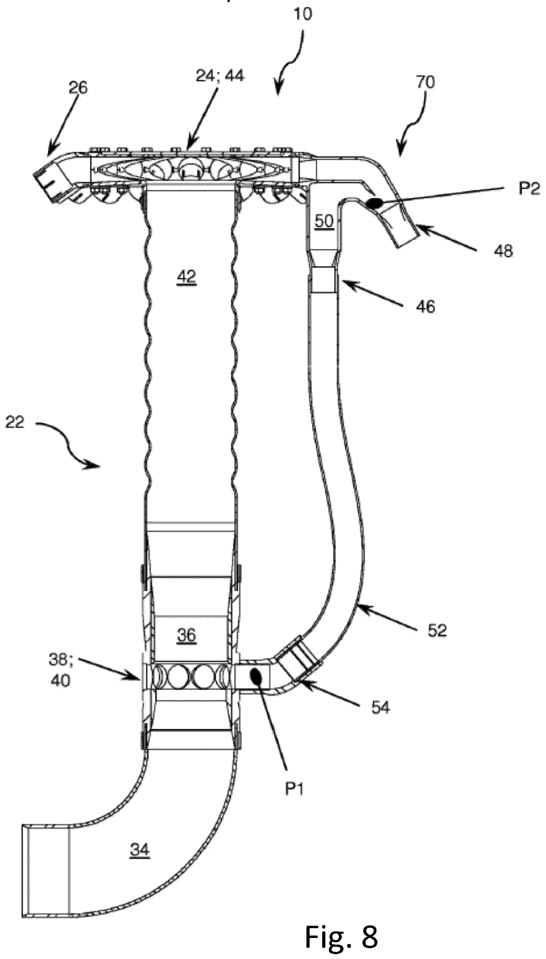

Eine weitere Ausführungsvariante eines Verteilerkopfs 24 zeigt die Fig. 8, wobei diese eine Druckausgleichsvorrichtung 70 aufweist. Der Verteilerturm 10 umfasst z. B. ein Steigrohr 22, an dessen oberem Ende der Verteilerkopf 24 anschließt. Am Umfang des Verteilerkopfs 24 ist in regelmäßigen Abständen eine Mehrzahl von Abgängen 26 angeordnet.

Der Verteilerturm 10 weist zunächst ein bogenförmiges Übergangsstück 34 auf. Mittels diesem erfolgt eine Richtungsumkehr des Verteilgut-Luftvolumenstroms aus einer weitgehend waagerechten in eine senkrechte Strömungsrichtung. An das Übergangsstück 34 schließt ein Steigrohr 22 an. Dieses umfasst verschiedene Abschnitte. Zunächst besitzt dieses eine Düse 36. Mittels dieser wird der Querschnitt des Steigrohrs 22 zunächst konisch verringert und anschließend wiederum konisch vergrößert. An der Stelle mit dem geringsten Querschnitt befinden sich Rückführeinrichtungen 38 in Form von ringförmigen Öffnungen 40. Mittels der Querschnittsverringerung soll der Verteilgut-Luftvolumenstrom im Steigrohr 22 zentriert werden. Dies soll durch ein an die Düse 36 anschließendes Wellrohr 42 noch weiter verbessert werden. Neben einem Wellrohr 42 wären auch andere Rohre mit Querschnittsverringerungen vorstellbar, bspw. derartige bei denen nur jeweils einzelne Vertiefungen vorhanden sind. Auch wäre es denkbar, dass Wellrohr 42 bspw. durch eine weitere Düse 36 zu ersetzen, so dass das Steigrohr 22 bspw. aus zwei Düsen oder mehr zusammengesetzt ist.

Am oberen Ende des Steigrohrs 22 schließt ein kreisförmiger Verteilerkopf 24 an. Dieser weist im Ausführungsbeispiel der Fig. 8 einen flachen Deckel 44 auf. Der Verteilerkopf 24 könnte jedoch auch verschiedenste andere Formen aufweisen, bspw. Pilzförmige oder dergl. Im Verteilerkopf 24 wird der Verteilgut-Luftvolumenstrom aus einer senkrechten in eine waagrechte Richtung in Richtung der Abgänge 26 umgelenkt, wobei hierzu das Verteilgut bspw. gegen den Deckel 44 prallen kann und anschließend durch den Luftvolumenstrom in Richtung der Abgänge 26 geleitet wird. Je gleichmäßiger diese Verteilung zwischen den Abgängen 26 erfolgt, desto gleichmäßiger ist die Querverteilung des Verteilguts der landwirtschaftlichen Maschine.

Um unabhängig von äußeren Einflüssen wie Förder- und/oder Saatleitungslängen oder dergl. ein gewünschtes Querverteilungsergebnis zu erreichen, ist es erforderlich, in den Komponenten des Verteilerturms 22 jeweils ein zumindest weitgehend gleiches bzw. konstantes Druckniveau bzw. weitgehend gleiche bzw. konstante Luftvolumenströme, bzw. weitgehend gleiche bzw. konstante Strömungsgeschwindigkeiten herzustellen. Um dies zu erreichen, sind das Steigrohr 22, die Rückführeinrichtung 38, der Bypass 50, sowie der Ausbringleitungsanschluss 48 permanent pneumatisch verbunden. Somit stellen sich im Verteilerturm 24 diverse Druckniveaus ein, wobei sich hierbei In der Rückführeinrichtung 38 ein Druckniveau P1 und in der Druckausgleichsvorrichtung 70 ein Druckniveau P2 und/oder P3 ergeben, und wobei P1 kleiner oder gleich zu P2 und/oder P3 ist.

Die in diesem Ausführungsbeispiel gezeigte Druckausgleichsvorrichtung 70 könnte insbesondere in Verbindung mit den zuvor beschriebenen Absperrvorrichtungen 38 kombiniert werden, so dass bspw. an einem Verteilerturm 10 nur eine geringe Anzahl von Abgängen 26 mit Schaltelementen 30 und/oder Absperrvorrichtungen 28 versehen sind sowie die restlichen jeweils mit Druckausgleichsvorrichtungen 70. Dies hätte den Vorteil, dass der Verteilerturm 10 nach wie vor alle Vorteile der sich einstellenden Druckniveaus besitzt, jedoch dieser wesentlich einfacher aufgebaut wäre, da nur eine geringe Anzahl von Abgängen mit Schaltelementen 30 und entsprechenden Stellantrieben versehen werden müsste.

Die Figur 9 zeigt eine perspektivische Ansicht einer Verteilmaschine 12, wobei Figur 10 eine zugehörige Seitenansicht eines Teilabschnitts der Verteilmaschine 12 der Figur 9 zeigt. Der Übersichtlichkeit halber sind in Figur 9 keine Ausbringleitungen 32 und in Figur 10 nur eine Ausbringleitung 32 gezeigt. Ebenfalls sind Figur 9 der Übersichtlichkeit halber nur drei Ausbringelemente (Säschare) mit dem Bezugszeichen D versehen.

Die Verteilmaschine 12 weist zwei Dosierorgane 16 auf, wobei ein erstes Dosierorgan 16 einem ersten Dosiergerät zugeordnet ist und ein zweites Dosierorgan 16 einem zweiten Dosiergerät zugeordnet ist. Die zwei Dosierorgane 16 sind vorzugsweise unabhängig voneinander betreibbar. Es ist sogar möglich, dass zumindest eines der Dosiergeräte zwei unabhängig voneinander betreibbare Dosierwalzen umfasst und die zumindest zwei Dosierwalzen im Wesentlichen koaxial zueinander angeordnet sind und/oder in einem gemeinsamen Dosiergerät-Gehäuse untergebracht sind.

Figur 11 zeigt eine Draufsicht auf eine Verteilmaschine 12 an unterschiedlichen Feldpositionen, wobei Figur 12 einen vergrößerten Teilbereich der Figur 11 zeigt, insbesondere eine Verteilgutabgabegrenze in Form einer (z. B. teilweise keilförmigen) Vorgewendegrenze. Die Vorgewendegrenze definiert besonders relevante Soll-Positionen SP zur Verteilgutausgabe aus den Ausbringelementen D.

Die Verteilmaschine 12 umfasst ein Positionsbestimmungssystem P zur Bestimmung von Ist-Positionen der Verteilmaschine 12 auf dem Feld und das Steuersystem C ist dazu eingerichtet, zumindest ein Dosierorgan 16 und/oder die Schaltelemente 30 basierend auf Soll-Positionen SP zur Verteilgutausgabe aus den Ausbringelementen D und basierend auf zumindest einer Förderdauer des Verteilguts vom Verteilerkopf 24 zu den Ausbringelementen D vorzugsweise vorauseilend zu steuern, was insbesondere dann relevant wird, wenn sich die Verteilmaschine 12 der Vorgewendegrenze annähert und/oder Vorgewendegrenze teilweise überschreitet.

Dadurch kann insbesondere eine Verteilgenauigkeit an und/oder entlang der Vorgewendegrenze verbessert werden, indem unerwünschte Verteilgutausgaben über die Verteilgutabgabegrenze hinaus zumindest reduziert werden und/oder unerwünschte Verteilgut-Fehlstellen innerhalb der Verteilgutabgabegrenze zumindest reduziert werden.

Die Figuren 11 und 12 verdeutlichen insbesondere, dass die Soll-Positionen SP insbesondere eine die Fahrtrichtung F der Verteilmaschine 12 kreuzende Verteilgutabgabegrenze umfassen, vorzugsweise eine Vorgewendegrenze. Die Verteilgutabgabegrenze (z.B. Soll-Position SP) und insbesondere die Vorgewendegrenze kann, wie z. B. in Figur 12 gezeigt, insbesondere relativ zur Fahrtrichtung F der Verteilmaschine 12 quer verlaufen (z. B. im Wesentlichen rechtwinklig oder im Wesentlichen schräg, je nach Grenzverlauf z. B. im Wesentlichen geradlinig, bogenförmig oder kurvenförmig). Das Vorgewende wird während des in den Figuren 11 und 12 gezeigten Verteilgutverfahrens durch die Verteilmaschine 12 nicht mit Verteilgut versorgt, mit Ausnahme unerwünschter Verteilgutausgaben (sogenannte Überlappungen) über die Verteilgutabgabegrenze hinaus. Das Vorgewende kann z. B. vor oder nach dem in den Figuren 11 und 12 gezeigten Verteilgutverfahren mit Verteilgut versorgt werden.

Die Figuren 11 und 12 zeigen ferner, dass die Soll-Positionen SP insbesondere an und/oder entlang der Vorgewendegrenze einen Toleranzbereich T umfassen können. Das Steuersystem C ist insbesondere dazu eingerichtet, die Soll-Positionen SP im und somit mit dem Toleranzbereich T zu berücksichtigen. Dadurch kann insbesondere das Steuersystem C entlastet werden.

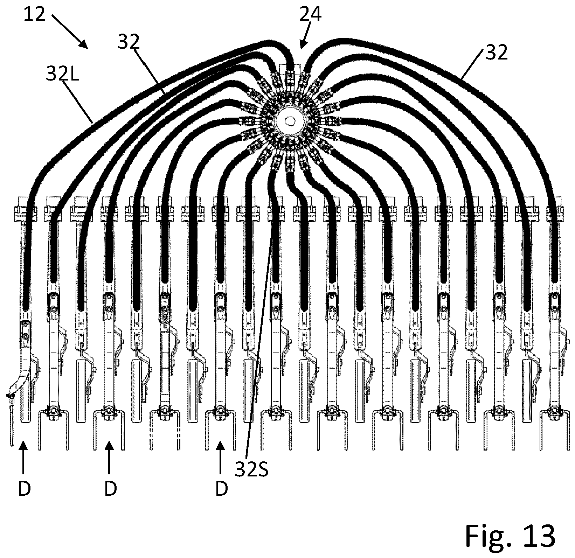

Figur 13 zeigt eine Draufsicht auf einen Teilabschnitt einer Verteilmaschine 12.

Figur 13 zeigt insbesondere, dass die Verteilmaschine 12 Ausbringleitungen 32 mit unterschiedlicher Förderlänge aufweist. Die Förderlängen können z. B. von seitlich außen nach innen kürzer werden. Lange Förderlängen gehen mit entsprechend langen Förderdauern einher. Kurze Förderlängen gehen mit entsprechend kurzen Förderlängen einher.

Das Steuersystem C kann z. B. dazu eingerichtet sein, das zumindest eine Dosierorgan 16 und/oder die Schaltelemente 30 basierend auf den unterschiedlichen Förderdauern des Verteilguts vom Verteilerkopf 24 zu den Ausbringelementen D insbesondere vorauseilend zu steuern. Z. B. kann zumindest ein Schaltelement 30, das einer Ausbringleitung 32S mit relativ kurzer Förderlänge zugeordnet ist, mit einer Verzögerungszeit verzögert gesteuert werden im Vergleich zu zumindest einem Schaltelement 30, das einer Ausbringleitung 32L mit relativ langer Förderlänge zugeordnet ist.

Die Verteilmaschine 12 kann eine zumindest einen Sensor umfassende Sensorik aufweisen.

Mittels der durch die Sensorik erfassten Mess- oder Erfassungsdaten können insbesondere Förderdauern des Verteilguts vom Verteilerkopf 24 zu zumindest einigen der Ausbringelemente D ermittelt werden, aber auch z. B. eine Förderdauer des Verteilguts vom Dosierorgan 16 zum Verteilerkopf 16. Zumindest ein Sensor kann z. B. am Verteilerkopf 24 positioniert sein und zumindest ein Sensor kann an zumindest einigen der Ausbringelemente D positioniert sein. Allerderdings ist auch eine Positionierung zwischen Verteilerkopf 24 und Ausbringelementen D möglich. Ebenfalls kann zumindest ein Sensor kann am Dosierorgan 16 oder zwischen Dosierorgan 16 und Verteilerkopf 24 positioniert sein.

Zu erwähnen ist, dass im Kontext der Erfindung die zumindest eine Förderdauer vorzugsweise zumindest eine Förderlänge umfassen kann und somit durch z. B. eine Förderlänge charakterisiert werden kann. Alternativ oder ergänzend können z. B. die Soll-Positionen vorzugsweise Soll-Zeitpunkte umfassen und somit z. B. durch Soll-Zeitpunkte charakterisiert werden. Deren Zusammenhang kann durch allgemein bekannte Formeln beschrieben werden, z. B. v = s / t (v = Geschwindigkeit [m/sec.]; s = Weg [m]; t = Zeit [sec.]). Somit fallen auch Förderlängen und/oder Soll-Zeitpunkte unter den Schutzumfang.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich der Ansprüche fallen.

### Bezugszeichenliste

10 Verteilerturm
12 Verteilmaschine, z. B. Sämaschine
14 Vorratsbehälter
16 Dosierorgan, z. B. Dosiervorrichtung
18 Förderleitung, z. B. Leitungssystem
20 Förderlufterzeugungseinrichtung, z. B. Gebläse
22 Förderrohr, z. B. Steig-, Schräg- oder Senkrohr
24 Verteilerkopf
26 Abgang
28 Absperrvorrichtung
30 Schaltelement, z. B. Weiche oder Klappe
32 Ausbringleitung, z. B. Saatleitung
32S kurze Ausbringleitung
32L lange Ausbringleitung
34 Übergangsstück
36 Düse
38 Rückführeinrichtung
40 Öffnung
42 Wellrohr
44 Deckel
45 Rückführbereich
46 Rückführanschluss, Rückführöffnung
48 Ausbringleitungsanschluss, z. B. Saatleitungsanschluss
50 Bypass
52 Rückleitung
54 Stutzen
56 Sammelstück
58 Flanschfläche
60 Einrastelement
62 Verteilgutkanal, z. B. Saatgutkanal
64 Rücklaufkanal
66 Abscheidebereich
68 Umlenkkontur
70 Druckausgleichsvorrichtung
D Ausbringelemente, z. B. Säschare
T Toleranzbereich
SP Soll-Positionen, z. B. Verteilgutagabegrenze
P Positionsbestimmungssystem
C Steuersystem
F Fahrtrichtung der Verteilmaschine

## Patentansprüche

1. Landwirtschaftliche pneumatische Verteilmaschine (12) zum Verteilen zumindest eines körnigen Verteilguts, mit:
- mehreren Ausbringelementen (D) zum Ausgeben des Verteilguts,
- zumindest einem Verteilerkopf (24), welcher über zumindest eine Förderleitung (18) mit zumindest einem Dosierorgan (16) verbunden ist, wobei der Verteilerkopf (24) mehrere Abgänge (26) aufweist, wobei die Abgänge (26) über jeweils eine Ausbringleitung (32) mit den Ausbringelementen (D) verbunden sind, wobei zumindest einige der Ausbringleitungen (32) mittels jeweils einem Schaltelement (30) schließbar und/oder öffenbar sind,
- einem Positionsbestimmungssystem (P) zur Bestimmung von Ist-Positionen der Verteilmaschine (12), und
- einem Steuersystem (C), welches dazu eingerichtet ist, das zumindest eine Dosierorgan (16) und/oder die Schaltelemente (30) zu steuern,
**dadurch gekennzeichnet, dass**
- das Steuersystem (C) dazu eingerichtet ist, das zumindest eine Dosierorgan (16) und/oder die Schaltelemente (30) basierend auf Soll-Positionen (SP) zur Verteilgutausgabe aus den Ausbringelementen (D) und basierend auf zumindest einer Förderdauer des Verteilguts vom Verteilerkopf (24) zu den Ausbringelementen (D) zu steuern.

2. Verteilmaschine (12) nach Anspruch 1, **dadurch gekennzeichnet, dass** das Steuersystem (C) dazu eingerichtet ist, das zumindest eine Dosierorgan (16) und/oder die Schaltelemente (30) vorauseilend zu steuern.

3. Verteilmaschine (12) nach Anspruch 1 oder 2, **dadurch gekennzeichnet, dass** die Soll-Positionen (SP) vordefinierbar sind.

4. Verteilmaschine (12) nach einem der vorhergehenden Ansprüche, **dadurch gekennzeichnet, dass** das Steuersystem (C) dazu eingerichtet ist, das zumindest eine Dosierorgan (16) und/oder die Schaltelemente (30) basierend auf einer sich verändernden Fahrgeschwindigkeit der Verteilmaschine (12) zu steuern und/oder basierend auf einer konstanten Fahrgeschwindigkeit der Verteilmaschine (12) zu steuern.

5. Verteilmaschine (12) nach Anspruch 4, **dadurch gekennzeichnet, dass** ein Beschleunigen der Verteilmaschine (12) zu einem zeitlich früheren Steuern führt und/oder ein Abbremsen der Verteilmaschine (12) zu einem zeitlich späteren Steuern führt.

6. Verteilmaschine (12) nach einem der vorhergehenden Ansprüche, **dadurch gekennzeichnet, dass** das Steuersystem (C) dazu eingerichtet ist, zu bestimmen, an welchen Positionen der Verteilmaschine (12) und/der zu welchen Zeitpunkten welche Schaltelemente (30) geöffnet und welche Schaltelemente (30) geschlossen werden und/oder das zumindest eine Dosierorgan (16) aktiviert oder deaktiviert wird.

7. Verteilmaschine (12) nach einem der vorhergehenden Ansprüche, **dadurch gekennzeichnet, dass**
- die Schaltelemente (30) jeweils eine vorzugsweise geöffnete Schaltstellung und/oder zumindest eine teilweise geöffnete Zwischenstellung aufweisen, in der Verteilgut über die Ausbringleitungen (32) zu den Ausbringelementen (D) führbar ist,
- die Schaltelemente (30) jeweils eine vorzugsweise geschlossene Schaltstellung aufweisen, in der eine Verteilgutzuführung an die Ausbringelemente(D) unterbindbar ist, in der Verteilgut mittels einer Rückleitung (52) rückführbar und erneut dem Verteilerkopf (24) zuführbar ist und/oder in der ein Bypass (50) eine jeweilige Ausbringleitung (32) mit einer zugehörigen Rückleitung (52) verbindet, und/oder
- die Verteilmaschine (12) einen Zirkulationsbereich aufweist, in dem mittels der Schaltelemente (30) rückgeführtes Verteilgut zirkulierbar ist.

8. Verteilmaschine (12) nach einem der vorhergehenden Ansprüche, **dadurch gekennzeichnet, dass**
- ein erstes Dosierorgan (16) für ein erstes Verteilgut und zweites Dosierorgan (16) für ein zweites Verteilgut zur Verfügung gestellt ist,
- das zumindest eine Dosierorgan (16) einem ersten Dosiergerät zugeordnet ist und die Verteilmaschine (12) zumindest ein weiteres Dosierorgan (16) aufweist, das zumindest einem weiteren Dosiergerät zugeordnet ist,
- die Verteilmaschine (12) eine Vielzahl an unabhängig voneinander betreibbaren Dosierorganen (16) und/oder eine Vielzahl an unabhängig voneinander betreibbaren Dosiergeräten umfasst, und/oder
- zumindest ein Dosiergerät zumindest zwei unabhängig voneinander betreibbare Dosierwalzen umfasst und vorzugsweise die zumindest zwei Dosierwalzen im Wesentlichen koaxial zueinander angeordnet sind und/oder in einem gemeinsamen Dosiergerät-Gehäuse untergebracht sind.

9. Verteilmaschine (12) nach einem der vorhergehenden Ansprüche, **dadurch gekennzeichnet, dass** das Steuersystem (C) dazu eingerichtet ist, das zumindest eine Dosierorgan (16) und/oder die Schaltelemente (30) basierend auf unterschiedlichen Förderdauern des Verteilguts vom Verteilerkopf (24) zu den Ausbringelementen (D) zu steuern, vorzugsweise vorauseilend zu steuern.

10. Verteilmaschine (12) nach einem der vorhergehenden Ansprüche, **dadurch gekennzeichnet, dass** das Steuersystem (C) dazu eingerichtet ist, zumindest ein Schaltelement (30), das einer Ausbringleitung (32S) mit kurzer Förderlänge zugeordnet ist, mit zumindest einer Verzögerungszeit verzögert zu steuern im Vergleich zu zumindest einem Schaltelement (30), das einer Ausbringleitung (32L) mit langer Förderlänge zugeordnet ist.

11. Verteilmaschine (12) nach einem der vorhergehenden Ansprüche, **dadurch gekennzeichnet, dass** die Verteilmaschine (12) eine zumindest einen Sensor umfassende Sensorik aufweist und
- die Steuereinrichtung (C) dazu eingerichtet ist, das zumindest eine Dosierorgan (16) und/oder die Schaltelemente (30) basierend auf Mess- oder Erfassungsdaten der Sensorik zu steuern, und/oder
- die zumindest eine Förderdauer des Verteilguts vom Verteilerkopf (24) zu zumindest einigen der Ausbringelemente (D) mittels der Sensorik ermittelbar sind.

12. Verteilmaschine (12) nach Anspruch 11, **dadurch gekennzeichnet, dass** zumindest ein Sensor am Verteilerkopf (24) positioniert ist, zumindest ein Sensor an zumindest einigen der Ausbringelemente (D) positioniert ist und/oder zumindest ein Sensor zwischen Verteilerkopf (24) und zumindest einigen der Ausbringelemente (D) positioniert ist.

13. Verteilmaschine (12) nach einem der vorhergehenden Ansprüche, **dadurch gekennzeichnet, dass** das Steuersystem (C) ein mathematisches Modell aufweist, mittels dessen die zumindest eine Förderdauer des Verteilguts vom Verteilerkopf (24) zu den Ausbringelementen (D) ermittelbar ist und/oder mittels dessen die zumindest eine Verzögerungszeit ermittelbar ist.

14. Verteilmaschine (12) nach einem der vorhergehenden Ansprüche, **dadurch gekennzeichnet, dass** das Steuersystem (C) dazu eingerichtet ist, das zumindest eine Dosierorgan (16) und/oder die Schaltelemente (30) basierend auf einer vordefinierbaren Verteilgut-Ausbringmenge und/oder einer vordefinierbaren Verteilgutsorte zu steuern.

15. Verteilmaschine (12) nach einem der vorhergehenden Ansprüche, **dadurch gekennzeichnet, dass** die Soll-Positionen (SP) eine Verteilgutabgabegrenze umfassen, vorzugsweise eine Feldgrenze und/oder Vorgewendegrenze.

16. Verteilmaschine (12) nach einem der vorhergehenden Ansprüche, **dadurch gekennzeichnet, dass** das Steuersystem (C) dazu eingerichtet ist, das Dosierorgan (16) und/oder die Schaltelemente (30) so zu steuern, dass ein an die Verteilgutabgabegrenze angepasstes Verteilgutmuster erzeugt wird.

17. Verteilmaschine (12) nach einem der vorhergehenden Ansprüche, **dadurch gekennzeichnet, dass** das Steuersystem (C) dazu eingerichtet ist, das zumindest eine Dosierorgan (16) und/oder die Schaltelemente (30) so zu steuern, dass eine unerwünschte Verteilgutausgabe über die Verteilgutabgabegrenze hinaus zumindest reduziert wird und/oder unerwünschte Verteilgut-Fehlstellen innerhalb der Verteilgutabgabegrenze zumindest reduziert werden.

18. Verteilmaschine (12) nach einem der vorhergehenden Ansprüche, **dadurch gekennzeichnet, dass** das Steuersystem (C) dazu eingerichtet ist, die Soll-Positionen (SP) und/oder die zumindest eine Förderdauer in einem vorzugsweise vordefinierbaren Toleranzbereich (T) zu berücksichtigen.

19. Verteilmaschine (12) nach einem der vorhergehenden Ansprüche, **dadurch gekennzeichnet, dass** das Steuersystem (C) dazu eingerichtet ist, eine Förderlufterzeugungseinrichtung (20) zur Erzeugung einer Förderluft zum Transportieren des Verteilguts vorzugsweise vorauseilend zu steuern, vorzugsweise basierend auf den Soll-Positionen (SP) und/oder basierend auf zumindest einer Förderdauer des Verteilguts vom Verteilerkopf (24) zu den Ausbringelementen (D).

20. Verteilmaschine (12) nach einem der vorhergehenden Ansprüche, **dadurch gekennzeichnet, dass** die Verteilmaschine (12) eine Eingabeeinrichtung umfasst und das Steuersystem (C) mit der Eingabeeinrichtung koppelbar ist, wobei mittels der Eingabeeinrichtung
- die Verteilgut-Ausbringmenge definierbar ist,
- die Verteilgutsorte definierbar ist,
- die Soll-Positionen (SP) definierbar sind, und/oder
- der Toleranzbereich (T) definierbar ist.

21. Verteilmaschine (12) nach einem der vorhergehenden Ansprüche, **dadurch gekennzeichnet, dass** das Steuersystem (C) dazu eingerichtet ist, das zumindest eine Dosierorgan (16) und/oder die Schaltelemente (30) basierend auf vom Positionsbestimmungssystem (P) bestimmten Ist-Positionen der Verteilmaschine (12) zu steuern, vorzugsweise relativ zu den Soll-Positionen (SP).

22. Verteilmaschine (12) nach einem der vorhergehenden Ansprüche, **dadurch gekennzeichnet, dass** das Positionsbestimmungssystem (P) ein Real-Time-Kinematic-System (RTK-System) umfasst.

23. Verteilmaschine (12) nach einem der vorhergehenden Ansprüche, **dadurch gekennzeichnet, dass** das Steuersystem (C) dazu eingerichtet ist, die Verteilmaschine (12), vorzugsweise das zumindest eine Dosierorgan (16) und/oder die Schaltelemente (30), basierend auf zumindest einem aktuellen Betriebszustand der Verteilmaschine (12) zu steuern, wobei vorzugsweise der zumindest eine aktuelle Betriebszustand umfasst:
- eine aktuelle Schaltstellung der Schaltelemente (30),
- eine aktuelle mittels des zumindest einen Dosierorgans (16) dosierte Verteilgutmenge,
- eine aktuelle Betriebsstellung der Ausbringelemente (D),
- eine aktuelle Drehzahl der Förderlufterzeugungseinrichtung (20), und/oder
- eine aktuelle Strömungsgeschwindigkeit in einer oder mehreren Ausbringleitungen (32) und/oder der Förderleitung (18).

24. Verteilmaschine (12) nach einem der vorhergehenden Ansprüche, **dadurch gekennzeichnet, dass** das Steuersystem (C) dazu eingerichtet ist, die Verteilmaschine (12), vorzugsweise das zumindest eine Dosierorgan (16) und/oder die Schaltelemente (30), basierend auf zumindest einer Anpassungsdauer zwischen einem aktuellen Betriebszustand und einem Soll-Betriebszustand an Soll-Positionen (SP) vorzugsweise vorauseilend zu steuern.

25. Verfahren zum Betreiben einer landwirtschaftlichen pneumatischen Verteilmaschine (12) zum Verteilen zumindest eines körnigen Verteilguts, vorzugsweise einer Verteilmaschine (12) nach einem der vorhergehenden Ansprüche, mit:
- mehreren Ausbringelementen (D) zum Ausgeben des Verteilguts,
- zumindest einem Verteilerkopf (24), welcher über zumindest eine Förderleitung (18) mit zumindest einem Dosierorgan (16) verbunden ist, wobei der Verteilerkopf (24) mehrere Abgänge (26) aufweist, wobei die Abgänge (26) über jeweils eine Ausbringleitung (32) mit den Ausbringelementen (D) verbunden sind, wobei zumindest einige der Ausbringleitungen (32) mittels jeweils einem Schaltelement (30) geschlossen und/oder geöffnet werden,
- einem Positionsbestimmungssystem (P) zur Bestimmung von Ist-Positionen der Verteilmaschine (12), und
- einem Steuersystem (C), welches das zumindest eine Dosierorgan (16) und/oder die Schaltelemente (30) steuert,
**dadurch gekennzeichnet, dass**
- das Steuersystem (C) das zumindest eine Dosierorgan (16) und/oder die Schaltelemente (30) basierend auf Soll-Positionen (SP) zur Verteilgutausgabe aus den Ausbringelementen (D) und basierend auf zumindest einer Förderdauer des Verteilguts vom Verteilerkopf (24) zu den Ausbringelementen (D) vorzugsweise vorauseilend steuert.
